# EUROPEAN PATENT APPLICATION

(11) **EP 2 169 021 A1**
(43) Date of publication of application: **31.03.2010**
(21) Application number: 09170624.2
(22) Date of filing: 18.09.2009
(51) Int. Cl.: C09D 11/10

(54) **Ink composition, inkjet recording method, and printed material**

(30) Priority: 25.09.2008 JP 2008245101
(71) Applicant: Fujifilm Corporation, Minato-ku Tokyo (JP)
(72) Inventor: Ohnishi, Hironori, Ashigarakami-gun Kanagawa (JP)
(74) Representative: Grünecker, Kinkeldey, Stockmair & Schwanhäusser Anwaltssozietät

(57) **Abstract**

An ink composition is provided that includes (A), an *N*-vinyllactam, (B) another polymerizable compound, (C) a polymerization initiator, (D) a basic compound, and (E) an oil-soluble dye having an oxidation potential of equal to or higher than 1.0 V (vs. SCEs); wherein of the total weight of the *N*-vinyllactam (A) and the other polymerizable compound (B) not less than 65 wt % is a monofunctional polymerizable compound. There is also provided an inkjet recording method that includes a step of discharging the ink composition onto a recording medium and a step of curing the ink composition by irradiating the discharged ink composition with actinic radiation. There is also provided a printed material recorded by the inkjet recording method.

## Description

The present invention relates to an ink composition and, for more detail, the ink jet composition suitably used for inkjet recording, an inkjet recording method and a printed material.

With regard to an image recording method for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrical charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the equipment is inexpensive and, since an image is formed directly on a recording medium by discharging an ink only on a required image area, the ink can be used efficiently and the running cost is low. Furthermore, there is little noise and it is excellent as an image recording system.

With regard to an ink composition that can be cured by irradiation with radiation such as ultraviolet rays and, in particular, an inkjet recording ink composition (radiation curing type inkjet recording ink), there is a desire for an ink composition that cures with high sensitivity and forms an image with high image quality. By achieving higher sensitivity, high curability upon exposure to actinic radiation can be imparted, and there are therefore provided various benefits such as a reduction in power consumption, longer lifetime of an actinic radiation generator due to a decrease in the load thereon and, as a result of adequate curing being achieved, suppression of evaporation of uncured low molecular weight material and of a reduction in the strength of an image formed.

Furthermore, there is a desire for an ink composition that gives an image (printed material) that is resistant to cracking, peeling off, etc., and gives a cured film that has excellent flexibility and adhesion to a substrate. A cured film having high flexibility and adhesion to a substrate enables a printed material to be displayed or stored for a long period of time in various environments while maintaining high image quality, and also has advantages such as ease of handling of the printed material.

Furthermore, improvement in the image strength due to higher sensitivity imparts high plate life to an image when the ink composition is used for the formation of an image of a lithographic printing plate.

On the other hand, with regard to a UV-curing ink, International Application WO 2007/013368 discloses, as an ink composition, a polymerizable monomer-containing actinic radiation-curing ink for inkjet which comprises as polymerizable monomers, relative to the total polymerizable monomers, 95 to 99.99 wt % of a monofunctional monomer and 0.01 to 5 wt % of a polyfunctional monomer, and for which the ductility of a cured coating exceeds 120%.

Furthermore, JP-PCT-2007-505964 (JP-PCT denotes a published Japanese translation of a PCT application) discloses a radiation-curing inkjet ink comprising at least 65 wt % of at least one monofunctional ethylenically unsaturated monomer, and at least one tri- or higher-functional ethylenically unsaturated monomer, the ink having a surface tension at 25°C of no greater than 36 dynes/cm.

However, as the conventional a UV-curing ink uses a pigment dispersion as a colorant, aggregation of the pigment occurs, thus causing problems such as nozzle clogging and lack of stability. Furthermore, use of a pigment reduces transparency and makes color hue insufficient so that it is difficult for photographic quality to be obtained.

Use of a dye as a colorant has been investigated in order to eliminate the drawbacks of the pigment, and an ink comprising a monomer having a polymerizable group and an oil-soluble dye is disclosed in JP-A-2003-221528, JP-A-2003-221530, and JP-A-2003-221532 (JP-A denotes a Japanese unexamined patent application publication). However, there is the problem that curability is insufficient because the dye prevents polymerization in radical polymerization system and, furthermore, there is the problem that a flexible image cannot be obtained, thus resulting in the occurrence of cracking in a printed material.

It is an object of the present invention to provide an ink composition that has excellent curability, provides an obtained image with excellent flexibility, and can cure well even when a dye is used as a colorant, thus giving an excellently transparent and flexible inkjet image. It is another object of the present invention to provide an ink composition that has good ink stability, causes little nozzle clogging, and gives good ink transparency when printed on a transparent support.

It is still another object of the present invention to provide an inkjet recording method employing the ink composition.

The above-mentioned objects have been accomplished by means (1), (11), and (19) below. (2) to (10) and (12) to (18), which are preferred embodiments, are also shown below.
(1) An ink composition comprising (A) an N-vinyllactam, (B) another polymerizable compound, (C) a polymerization initiator, (D) a basic compound, and (E) an oil-soluble dye having an oxidation potential of equal to or higher than 1.0 V (vs. SCE), wherein of the total weight of the *N*-vinyllactam (A) and the other polymerizable compound (B), not less than 65 wt % is a monofunctional polymerizable compound,
(2) the ink composition according to (1), wherein the content of the N-vinyllactam (A) is at least 15 wt % and not more than 40 wt % of the total weight of the ink composition,
(3) the ink composition according to (1) or (2), wherein the *N*-vinyllactam (A) is N-vinylcaprolactam,
(4) the ink composition according to any one of (1) to (3), wherein the content ratio (ratio by weight) of the *N*-vinyllactam (A) to the other polymerizable compound (B) in the ink composition is *N*-vinyllactam (A):other polymerizable compound (B) = 1:6.3 to 1:1,
(5) the ink composition according to any one of (1) to (4), wherein the other polymerizable compound (B) comprises a radically polymerizable compound having a polycyclic structure,
(6) the ink composition according to any one of (1) to (5), wherein it comprises an N-vinyllactam and a monofunctional (meth)acrylate as the monofunctional polymerizable compound, the monofunctional (meth)acrylate being selected from the group consisting of phenoxyethyl (meth)acrylate and a (meth)acrylate containing an alicyclic residue selected from the group consisting of a norbornyl structure, an isobornyl structure, a dicyclopentanyl structure, a dicyclopentenyl structure, and an adamantyl structure,
(7) the ink composition according to any one of (1) to (6), wherein the basic compound (D) is a nitrogen-containing organic basic compound,
(8) the ink composition according to any one of (1) to (7), wherein the basic compound (D) is an organic amine compound having an ethylenically unsaturated bond,
(9) the ink composition according to any one of (1) to (8), wherein the oil-soluble dye having an oxidation potential of equal to or higher than 1.0 V (vs. SCE) is selected from the group consisting of M-1, Y-1, and C-1 below, 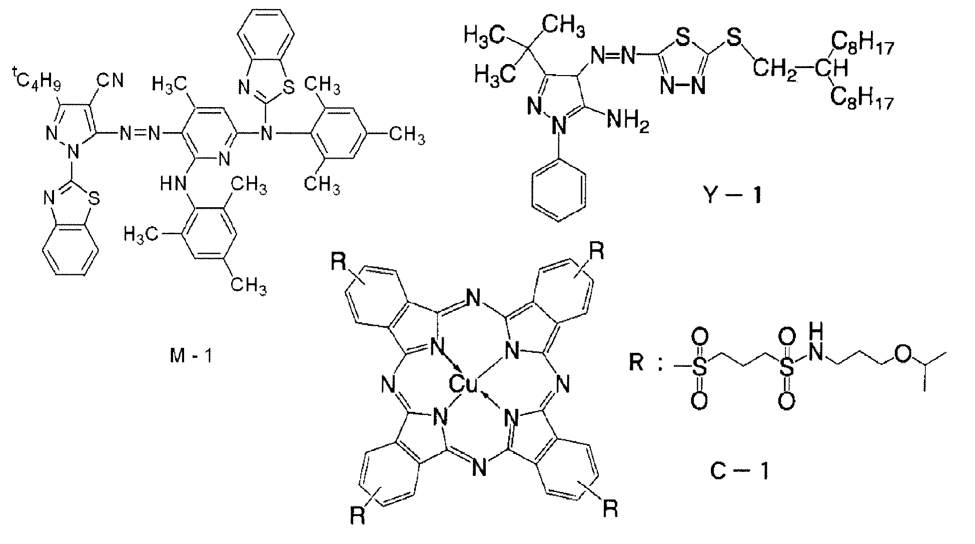
(10) the ink composition according to any one of (1) to (9), wherein the ink composition has a viscosity at 25°C of 5 to 50 mPa·s,
(11) an inkjet recording method comprising a step of discharging an ink composition onto a recording medium and a step of curing the ink composition by irradiating the discharged ink composition with actinic radiation, the ink composition comprising (A) an N-vinyllactam, (B) another polymerizable compound, (C) a polymerization initiator, (D) a basic compound, and (E) an oil-soluble dye having an oxidation potential of equal to or higher than 1.0 V (vs. SCE), wherein of the total weight of the N-vinyllactam (A) and the other polymerizable compound (B), not less than 65 wt % is a monofunctional polymerizable compound,
(12) the inkjet recording method according to (11), wherein the content of the *N-*vinyllactam (A) is at least 15 wt % and not more than 40 wt % of the total weight of the ink composition,
(13) the inkjet recording method according to (11) or (12), wherein the *N-*vinyllactam (A) is N-vinylcaprolactam,
(14) the inkjet recording method according to any one of (11) to (13), wherein the content ratio (ratio by weight) of the *N*-vinyllactam (A) to the other polymerizable compound (B) in the ink composition is N-vinyllactam (A):other polymerizable compound (B) = 1:6.3 to 1:1,
(15) the inkjet recording method according to any one of (11) to (14), wherein the other polymerizable compound (B) comprises a radically polymerizable compound having a polycyclic structure,
(16) the inkjet recording method according to any one of (11) to (15), wherein the ink composition comprises an *N*-vinyllactam and a monofunctional (meth)acrylate as the monofunctional polymerizable compound, the monofunctional (meth)acrylate being selected from the group consisting of phenoxyethyl (meth)acrylate and a (meth)acrylate containing an alicyclic residue selected from the group consisting of a norbornyl structure, an isobornyl structure, a dicyclopentanyl structure, a dicyclopentenyl structure, and an adamantyl structure,
(17) the inkjet recording method according to any one of (11) to (16), wherein the basic compound (D) is an organic amine compound having an ethylenically unsaturated bond,
(18) the inkjet recording method according to any one of (11) to (17), wherein the oil-soluble dye having an oxidation potential of equal to or higher than 1.0 V (vs. SCE) is selected from the group consisting of M-1, Y-1, and C-1 below, and 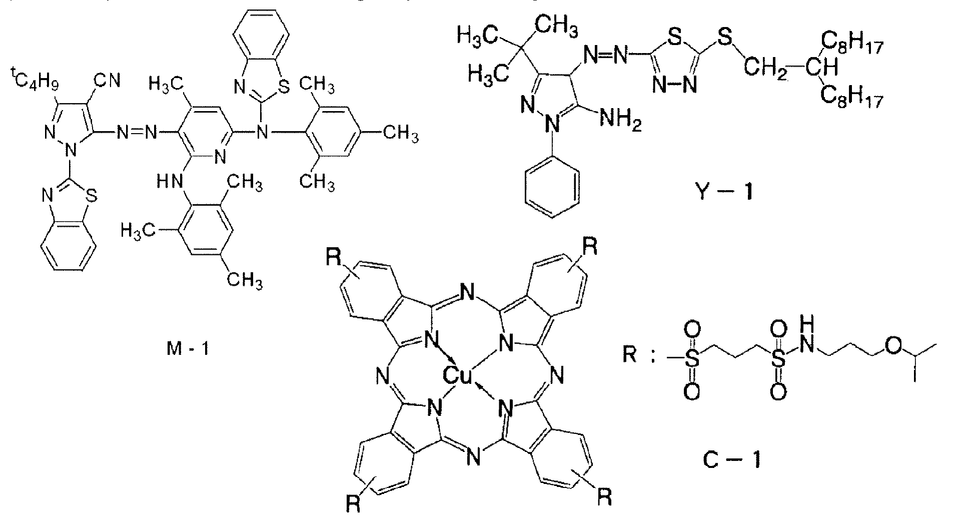
(19) a printed material recorded by the inkjet recording method according to any one of (11) to (18).

In accordance with the present invention, there can be provided an ink composition that ensures excellent storage stability, enables stable discharge, and cures well even when a dye is used as a colorant, thus giving an excellently transparent and flexible inkjet image.

In accordance with the present invention, there can further be provided an inkjet recording method employing the ink composition.

### (1) Ink composition

The ink composition (hereinafter also called simply an 'ink') of the present invention comprises (A) an *N*-vinyllactam, (B) another polymerizable compound, (C) a polymerization initiator, (D) a basic compound, and (E) an oil-soluble dye having an oxidation potential of equal to or higher than 1.0 V (vs. SCE), wherein of the total weight of the N-vinyllactam (A) and the other polymerizable compound (B), not less than 65 wt % is a monofunctional polymerizable compound.

The ink composition of the present invention is described in detail below. In the description below, '(from) A to B', which denotes the range of number, means 'not less than A and not more than B'. In other words, it means the range of number including A and B.

### (A) N-vinyllactam

The ink composition of the present invention comprises an *N*-vinyllactam. Preferred examples of the *N*-vinyllactam include compounds represented by Formula (I) below. In some of the compound examples below, the hydrocarbon chain is described by a simplified structural formula in which symbols for carbon (C) and hydrogen (H) are omitted.

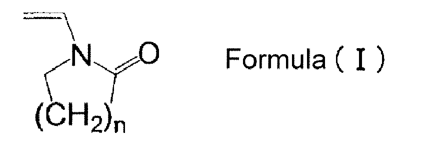

In Formula (I), n denotes an integer of 1 to 5; n is preferably an integer of 2 to 4 from the viewpoint of flexibility after the ink composition is cured, adhesion to a recording medium, and ease of availability of starting material, n is more preferably an integer of 2 or 4, and n is particularly preferably 4, which is N-vinylcaprolactam. *N*-vinylcaprolactam is preferable since it has excellent safety, is commonly used and easily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded thereto.

The ink composition of the present invention preferably comprises an *N-*vinyllactam at 15 wt % or greater of the total weight of the ink composition. When the content of the *N*-vinyllactam is not less than 15 wt %, it is possible to obtain an ink composition that excels in curability, flexibility of a cured film, and adhesion to a substrate. It is more preferable for the content of the *N-*vinyllactam in the ink composition to be in the range of from 15 wt % to 35 wt %, and particularly preferably from 18 wt % to 30 wt %.

The *N*-vinyllactam is a compound having a relatively high melting point. It is preferable for the content of the *N*-vinyllactam to be not more than 40 wt % since good solubility is exhibited even at a low temperature of 0°C or less and the temperature range in which the ink composition can be handled becomes large.

The *N*-vinyllactam may be contained in the ink composition singly or in a combination of a plurality of types thereof. When it contains a plurality of types of N-vinyllactam, the ink composition of the present invention preferably comprises the *N*-vinyllactams as a total combined amount at at least 15 wt % of the total weight of the ink composition.

### (B) Other polymerizable compound

The ink composition of the present invention employs another polymerizable compound in combination in addition to the N-vinyllactam. Examples of the other polymerizable compound that can be used in combination include a radically polymerizable compound and a cationically polymerizable compound, and among them it is preferable to use a radically polymerizable compound in combination.

The combined use of a radically polymerizable compound enables an ink composition having better curability to be provided, which is preferable. The 'radically polymerizable compound' referred to in the present invention naturally means a radically polymerizable compound other than an N-vinyllactam.

### Radically polymerizable compound

As the radically polymerizable compound, a photocuring material is known that employs a photopolymerizable composition described in, for example, JP-A-7-159983, JP-B-7-31399, JP-A-8-224982, JP-A-10-863, etc. (JP-B denotes a Japanese examined patent application publication).

The radically polymerizable compound is a compound having a radically polymerizable ethylenically unsaturated bond, and may be any compound as long as it has at least one radically polymerizable ethylenically unsaturated bond in the molecule (ethylenically unsaturated compond); examples thereof include those having a chemical configuration such as a monomer, an oligomer, or a polymer, and a monomer and an oligomer are preferable. One type of radically polymerizable compound may be used, or two or more types thereof may be used in combination at any ratio in order to improve an intended property.

Examples of the polymerizable compound having a radically polymerizable ethylenically unsaturated bond include unsaturated carboxylic acids such as acrylic acid, methacrylic acid, itaconic acid, crotonoic acid, isocrotonoic acid, and maleic acid, and esters and salts thereof, anhydrides having an ethylenically unsaturated bond, acrylonitrile, styrene, and various types of unsaturated polyesters, unsaturated polyethers, unsaturated polyamides, unsaturated urethanes, (meth)acryl type monomer or prepolymer and (meth)acrylate esters of epoxy type monomer or prepolymer, urethane type monomer or prepolymer.

Specific examples thereof include (poly)ethylene glycol mono(meth)acrylate, (poly)ethylene glycol (meth)acrylate methyl ester, (poly)ethylene glycol (meth)acrylate ethyl ester, (poly)ethylene glycol (meth)acrylate phenyl ester, (poly)propylene glycol mono(meth)acrylate, (poly)propylene glycol mono(meth)acrylate phenyl ester, (poly)propylene glycol (meth)acrylate methyl ester, (poly)propylene glycol (meth)acrylate ethyl ester, (poly)propylene glycol diglycidyl ether acrylic acid adduct, neopentyl glycol di(meth)acrylate, (poly)ethylene glycol di(meth)acrylate, (poly)tetramethylene glycol di(meth)acrylate, bisphenol A PO (propylene oxide) adduct di(meth)acrylate, ethoxylated neopentyl glycol diacrylate, propoxylated neopentyl glycol diacrylate, bisphenol A EO (ethylene oxide) adduct di(meth)acrylate, EO-modified pentaerythritol tri(meth)acrylate, PO-modified pentaerythritol tri(meth)acrylate, EO-modified pentaerythritol tetra(meth)acrylate, PO-modified pentaerythritol tetra(meth)acrylate, EO-modified dipentaerythritol tetra(meth)acrylate, PO-modified dipentaerythritol tetra(meth)acrylate, EO-modified trimethylolpropane tri(meth)acrylate, PO-modified trimethylolpropane tri(meth)acrylate, EO-modified tetramethylolmethane tetra(meth)acrylate, and PO-modified tetramethylolmethane tetra(meth)acrylate, acrylic acid derivatives such as 2-ethylhexyl acrylate, *n*-octyl acrylate, *n*-nonyl acrylate, *n*-decyl acrylate, isooctyl acrylate, *n*-lauryl acrylate, *n-*tridecyl acrylate, *n*-cetyl acrylate, *n*-stearyl acrylate, isomyristyl acrylate, isostearyl acrylate, 2-hydroxyethyl acrylate, butoxyethyl acrylate, tetrahydrofurfuryl acrylate, benzyl acrylate, pentaerythritol triacrylate, pentaerythritol tetraacrylate, dipentaerythritol tetraacrylate, trimethylolpropane triacrylate, oligoester acrylate, isoamyl acrylate, N-methylol acrylamide, diacetone acrylamide, epoxy acrylate, methacrylic acid derivatives such as methylmethacrylate, *n*-butyl methacrylate, 2-ethylhexyl methacrylate, *n*-octyl methacrylate, *n*-nonyl methacrylate, *n*-decyl methacrylate, isooctyl methacrylate, *n*-lauryl methacrylate, *n*-tridecyl methacrylate, *n*-cetyl methacrylate, *n*-stearyl methacrylate, allylmethacrylate, glycidyl methacrylate, benzyl methacrylate, dimethylaminomethyl methacrylate, trimethylolethane trimethacrylate, and 2,2-bis(4-methacryloxypolyethoxyphenyl)propane, and allyl compound derivatives such as allyl glycidyl eter, diallyl phthalate and triallyltrimellitate. Other specific examples thereof include 1,6-hexanediol diacrylate, 1,9-nonanediol diacrylate, 1,10-decanediol diacrylate, 2-ethylhexyl-diglycol acrylate, 2-hydroxy-3-phenoxypropyl acrylate, 2-hydroxybutyl acrylate, neopentylglycol diacrylate hydroxypivalate, 2-acryloyloxyethylphthalic acid, EO-modified nonylphenol acrylate, methoxy-polyethyleneglycol acrylate, 2-acryloyloxyethyl-2-hydroxyethylphthalic acid, dimethyloltricyclodecane diacrylate, ethoxylated phenylacrylate, 2-acryloyloxyethylsuccinic acid, modified glycerol triacrylate, bisphenol A diglycigyl ether acrylic acid adduct, modified bisphenol A diacrylate, phenoxy-polyethylene glycol acrylate, 2-acryloyloxyethylhexahydrophthalic acid, dipentaerythritol hexaacrylate, tolylenediisocyanate urethane prepolymer, lactone modified flexible acrylate, butoxyethyl acrylate, hexametylenediisocyanate urethane prepolymer, 2-hydroxyethyl acrylate, methoxydipropylene grycol acrylate, ditrimetylolpropane tetraacrylate, and hexametylenediisocyanate urethane prepolymer, etc. More specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku (genryo-hen)' (UV·EB Curing Handbook (Starting Materials)) Ed. K. Kato (Kobunshi Kankoukai, 1985); 'UV·EB Koka Gijutsu no Oyo to Shijyo' (Application and Market of UV·EB Curing Technology), p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) may be used.

These (meth)acrylate compounds are preferable since the viscosity can be decreased compared with polymerizable compounds conventionally used in a UV-curing ink, stable discharge properties can be obtained, and polymerization sensitivity and adhesion to a recording medium are also good.

A vinyl ether compound is preferably used as the radically polymerizable compound, and can be classified broadly into monovinyl ether compounds and polyvinyl ether compounds such as a di- or trivinyl ether. Examples of vinyl ether compounds that are suitably used include di- or trivinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether; and monovinyl ether compounds such as ethylene glycol monovinyl ether, triethylene glycol monovinyl ether, hydroxyethyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, hydroxyl nonyl monovinyl ether, cyclohexanedimethanol monovinyl ether, *n*-propyl vinyl ether, isopropyl vinyl ether, isopropenyl vinyl ether, isopropenyl ether-O-propylene carbonate, dodecyl vinyl ether, diethylene glycol monovinyl ether, and octadecyl vinyl ether.

Among these vinyl ether compounds, from the viewpoint of curability, adhesion, and surface hardness, a divinyl ether compound and a trivinyl ether compound are preferable, and a divinyl ether compound is particularly preferable. The vinyl ether compounds may be used singly or in a combination of two or more types as appropriate.

Furthermore, in the present invention, it is also preferable to use a radically polymerizable compound having a polycyclic structure as the radically polymerizable compound in combination with the N-vinyllactam.

Specifically, a radically polymerizable compound having a norbonyl structure, isobornyl structure, a dicyclopentanyl structure, a dicyclopentenyl structure, or an adamantyl structure is preferable. It is preferable to use a radically polymerizable compound having a polycyclic structure since it has high reactivity, low viscosity, and excellent adhesion to a recording medium.

Examples of the radically polymerizable compound having a polycyclic structure that can be used preferably in the present invention are listed below, but the present invention is not limited thereby.

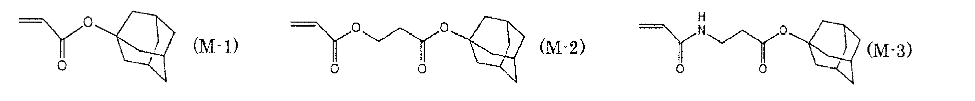

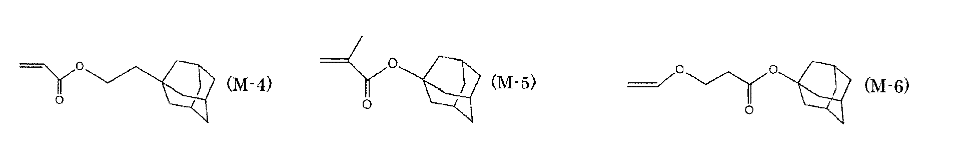

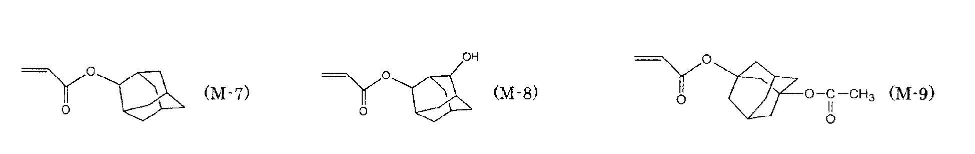

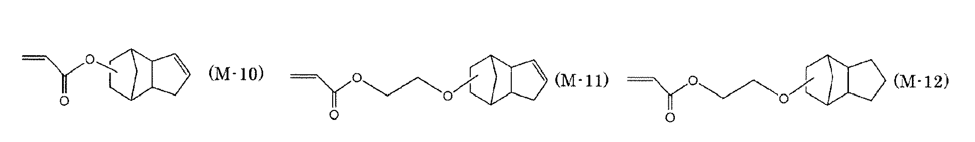

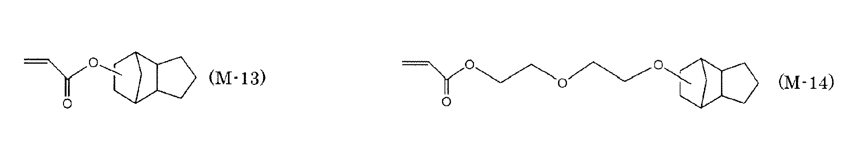

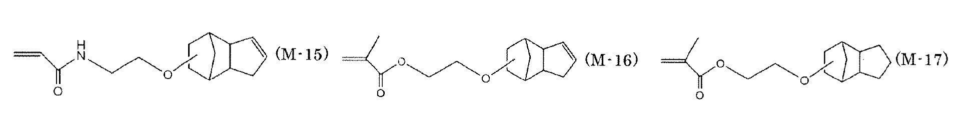

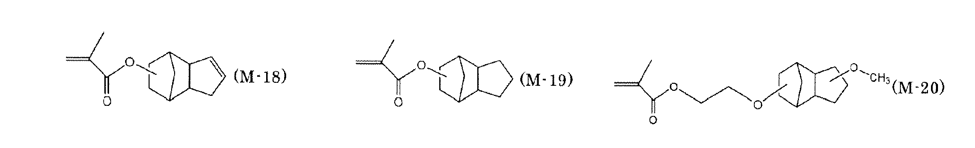

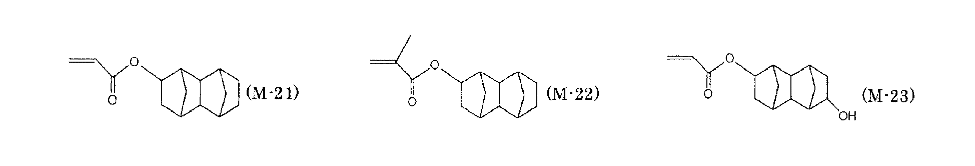

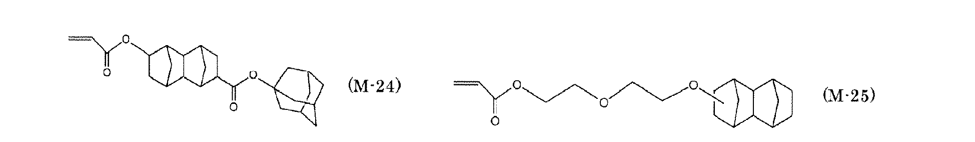

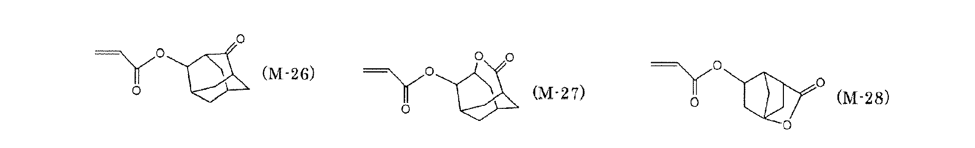

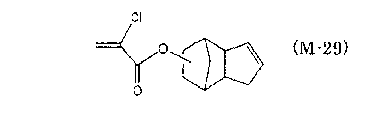

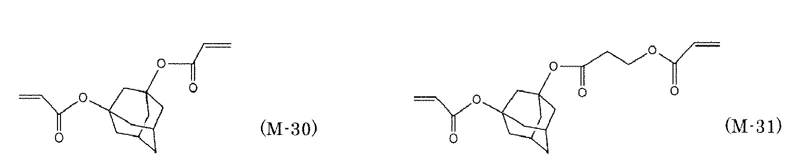

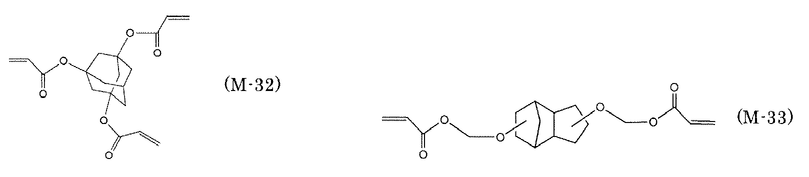

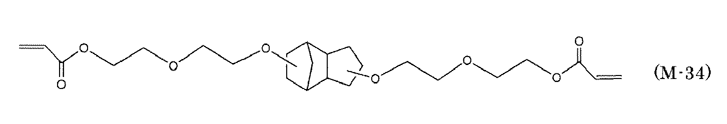

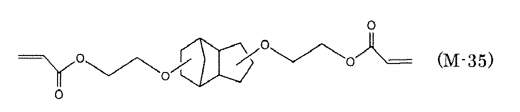

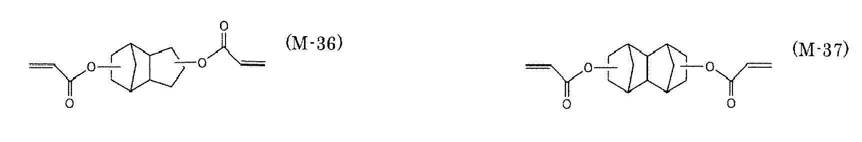

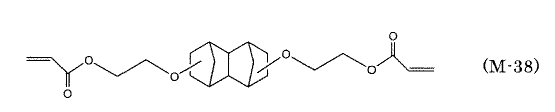

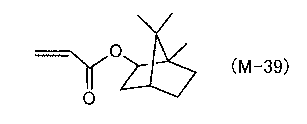

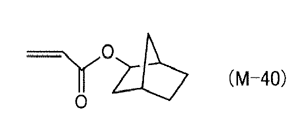

When other polymerizable compound (B) includes a radically polymerizable compound having a polycyclic structure, the content of the radically polymerizable compound having a polycyclic structure is preferably from 1 to 15 wt %, more preferable from 3 to 10 wt %, yet more preferable from 5 to 8 wt % of the total weight of the N-vinyllactam (A) and the other polimerizable compound (B). It is preferable that the content of the radically polymerizable compound having a polycyclic structure is in the above-mentioned range since the curability, adhesion, and surface hardness is excellent.

Furthermore, the radically polymerizable compound having a polycyclic structure may be a monofunctional radically polymerizable compound or a polyfunctional radically polymerizable compound, being not limited to, but preferably a monofunctional radically polymerizable compound.

The content ratio (ratio by weight) of the N-vinyllactam (A) to the other polymerizable compound (B) in the ink composition is preferably N-vinyllactam : the other polymerizable compound (B) which can copolymerize = 1:6.3 to 1:1, more preferably 1:6 to 1:1, and particularly preferably 1:5 to 1:1. It is preferable to combine them in the above-mentioned range since good curability, flexibility of a cured film, and adhesion of the cured film to a substrate are obtained.

In the present invention, the radically polymerizable compound may be used in combination with an oligomer or a polymer. The oligomer referred to here means a compound having a molecular weight (a weight-average molecular weight for one having a molecular weight distribution) of 2,000 or greater, and the polymer referred to here means a compound having a molecular weight (a weight-average molecular weight for one having a molecular weight distribution) of 10,000 or greater. The oligomer and the polymer optionally have a radically polymerizable group, but preferably have a radically polymeriable group. It is preferable for the oligomer and the polymer to have 1 to 4 radically polymerizable groups per molecule since an ink composition having excellent flexibility can be obtained. They can suitably be used from the viewpoint of adjusting the viscosity to a level most suitable for jetting the ink.

The content of the oligomer and the polymer is preferably 0 to 10 wt % relative to the total amount of the radically polymerizable compound, more preferably 0 to 8 wt %, and yet more preferably 0 to 5 wt %.

### Cationically polymerizable compound

The ink composition of the present invention may comprise in combination as necessary a cationic polymerizable compound as another polymerizable compound. When a cationic polymerizable compound is used in combination, it is preferable to use a cationic polymerization initiator in combination as a polymerization initiator.

The cationically polymerizable compound used in the present invention is not particularly limited as long as it is a compound that undergoes a polymerization reaction by virtue of an acid generated by the photo-acid generator and is cured, and various types of cationically polymerizable monomers known as photo-cationically polymerizable monomers may be used. Examples of the cationically polymerizable monomer include epoxy compounds, vinyl ether compounds, oxetane compounds described in JP-A-6-9714, JP-A-2001-31892, JP-A-2001-40068, JP-A-2001-55507, JP-A-2001-310938, JP-A-2001-310937, JP-A-2001-220526, etc.

As the cationically polymerizable compound, for example, a polymerizable compound applied to a cationically polymerizable type photocuring resin is known, and in recent years polymerizable compounds applied to cationically photopolymerizable type photocuring resins sensitized to a visible light wavelength region of 400 nm or longer have been disclosed in, for example, JP-A-6-43633 and JP-A-8-324137. They may also be applied to the ink composition of the present invention.

The ink composition of the present invention may have a monofunctional or a polyfunctional polymerizable compound as other polymerizable compound (B). Here, a 'monofunctional polymerizable compound' and 'a polyfunctional polymerizable compound' mean, respectively, a polymerizable compound having only one polymerizable residue in the molecule and a polymerizable compound having two or more polymerizable residues in the molecule. Of the total weight of the N-vinyllactam (A) and the other polymerizable compound (B) in the ink composition of the present invention, not less than 65 wt % is a monofunctional polymerizable compound.

As the monofunctional polymerizable compound, a compound selected from the group consisting of a monofunctional (meth)acrylate, a monofuctional vinyloxy compound, a monofuctional N-vinyl compound and a monofunctional (meth)acrylamide is preferably used.

It is more preferable that the content of the monofunctinal N-vinyllactam and the monofunctional (meth)acrylate which are added as the monofunctional polymerizable compound are not less than 65 wt % of the total weight of the *N-*vinyllactam (A) and the other polymerizable compound (B). As a monofunctional (meth)acrylate, a phenoxyethyl (meth)acrylate and a (meth)acrylate containing an alicyclic residue selected from the group consisting of a norbonyl structure, an isobornyl structure, a dicyclopentanyl structure, a dicyclopentenyl structure, and an adamantyl structure are particularly preferably used.

By adjusting the content of the monofunctional polymerizable compounds to be not less than 65 wt %, in other words, adjusting the content of the polyfunctional polymerizable compounds to be less than 35 wt % of the total amount of the N-vinyllactam and the other polymerizable compounds, the image (cured film) on the recording material obtained by irradiation with actinic radiation to the ink composition is given a moderate flexibility.

The content of the monofunctional compound is preferably not less than 80 wt %, and more preferably not less than 90 wt % and not more than 98 wt %. As the content rate of the monofunctional polimerizable compound is increased, the flexibility of obtained image (cured film) is improved. It is preferable for flexibility to be high when the recording material is subjected to bending or a forming process and the like.

As a forming process, embossing, vacuum forming, pressure forming, vacuum/pressure forming or shrink forming may be included here.

### (C) Polymerzation initiator

The polymerization initiator (C) preferably has a function to initiate the (co)polymerization of the *N*-vinyllactam (A) and the other polymerizable compound (B) by irradiation with (actinic) radiation.

The '(actinic) radiation' referred to in the present invention is not particularly limited as long as it is actinic radiation that can provide energy that enables an initiating species to be generated in the ink composition when irradiated, and broadly includes α rays, γ rays, X rays, UV rays, visible light, and an electron beam; among these, UV rays and an electron beam are preferable from the viewpoint of curing sensitivity and the availability of equipment, and UV rays are particularly preferable. The ink composition of the present invention is therefore preferably an ink composition that is curable upon exposure to UV rays as radiation.

In the present invention, when the ink is cured using (actinic) radiation such as UV rays, it comprises a polymerization initiator. As a polymerization initiator that can be used in the present invention, a known polymerization initiator may be used, and it is preferable to use a radical polymerization initiator. The polymerization initiator that can be used in the present invention may be used singly or in a combination of two or more types. Furthermore, the radical polymerization initiator may be used in combination with a cationic polymerization initiator.

### Radical polymerization initiator

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, and (I) a compound having a carbon-halogen bond. With regard to these radical polymerization initiators, the above-mentioned compounds (a) to (I) may be used singly or in combination. The radical polymerization initiator used in the present invention may suitably be used singly or in a combination of two or more types.

Preferred examples of the aromatic ketone (a), the acylphosphine compound (b) and the thio compoud (e) include a compound having a benzophenone skeleton (benzophenone compound) or a compound having a thioxanthone skeleton (thioxanthone compound) described in 'RADIATION CURING IN POLYMER SCIENCE AND TECHNOLOGY' J. P. FOUASSIER and J. F. RABEK (1993), pp. 77 to 117. Preferred examples include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561A1, p-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

As the aromatic onium salt compound (c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4837124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3902144, 4933377, 4760013, 4734444, and 2833827, diazonium salt resins (diazodiphenylamine formaldehyde resins, etc.), *N*-alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (d), almost all organic compounds having at least one oxygen-oxygen bond per molecule can be cited, and preferred examples thereof include peroxide ester compounds such as 3,3',4,4'-tetra(*t-*butylperoxycarbonyl)benzophenone, 3,3',4,4'-tetra(*t-*amylperoxycarbonyl)benzophenone, 3,3',4,4'-tetra(*t-*hexylperoxycarbonyl)benzophenone, 3,3',4,4'-tetra(*t-*octylperoxycarbonyl)benzophenone, 3,3',4,4'-tetra(cumylperoxycarbonyl)benzophenone, 3,3',4,4'-tetra(p-isopropylcumylperoxycarbonyl)benzophenone, and di-*t*-butyldiperoxyisophthalate.

As the hexaarylbiimidazole compound (f), there can be cited lophine dimers described in JP-B-45-37377 and JP-B-44-86516, and examples thereof include 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(*o*,*p*-dichlorophenyl)-4,4',5,5'-tetraphenylbiimidazole, 2,2'-bis(o-chlorophenyl)-4,4',5,5'-tetra(*m-*methoxyphenyl)biimidazole, 2,2'-bis(*o*,*o*'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole, and 2,2'-bis(*o-*trifluorophenyl)-4,4',5,5'-tetraphenylbiimidazole.

As the ketoxime ester compound (g), there can be cited 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-p-toluenesulfonyloxyiminobutan-2-one, and 2-ethoxycarbonyloxyimino-1-phenylpropan-1-one.

Examples of the borate compound (h) include compounds described in US Pat. Nos. 3,567,453 and 4,343,891, and EP Nos. 109,772 and 109,773.

Examples of the azinium salt compound (i) include N-O bond-containing compounds described in JP-A-63-138345, JP-A-63-142345, JP-A-63-142346, JP-A-63-143537, and JP-B-46-42363.

Examples of the metallocene compound (j) include titanocene compounds described in JP-A-59-152396, JP-A-61-151197, JP-A-63-41484, JP-A-2-249, and JP-A-2-4705, and iron-arene complexes described in JP-A-1-304453 and JP-A-1-152109.

Specific examples of the titanocene compound include dichlorobis(cyclopentadienyl)titanium, bis(cyclopentadienyl)bis(phenyl)titanium, bis(cyclopentadienyl)bis(2,3,4,5,6-pentafluorophen-1-yl)titanium, bis(cyclopentadienyl)bis(2,3,5,6-tetrafluorophen-1-yl)titanium, bis(cyclopentadienyl)bis(2,4,6-trifluorophen-1-yl)titanium, bis(cyclopentadienyl)bis(2,6-difluorophen-1-yl)titanium, bis(cyclopentadienyl)bis(2,4-difluorophen-1-yl)titanium, bis(methylcyclopentadienyl)bis(2,3,4,5,6-pentafluorophen-1-yl)titanium, bis(methylcyclopentadienyl)bis(2,3,5,6-tetrafluorophen-1-yl)titanium, bis(methylcyclopentadienyl)bis(2,4-difluorophen-1-yl)titanium, bis(cyclopentadienyl)bis[2,6-difluoro-3-(pyrr-1-yl)phenyl]titanium, bis(cyclopentadienyl)bis[2,6-difluoro-3-(methylsulfonamido)phenyl]titanium, and bis(cyclopentadienyl)bis[2,6-difluoro-3-(*N*-butylbiaroylamino)phenyl]titanium.

Examples of the active ester compound (k) include nitrobenzyl ester compounds described in EP Nos. 0290750, 046083, 156153, 271851, and 0388343, US Pat. Nos. 3901710 and 4181531, JP-A-60-198538, and JP-A-53-133022, iminosulfonate compounds described in EP Nos. 0199672, 84515, 199672, 044115, and 0101122, US Pat. Nos. 4618564, 4371605, and 4431774, JP-A-64-18143, JP-A-2-245756, and JP-A-4-365048, and compounds described in JP-B-62-6223, JP-B-63-14340, and JP-A-59-174831.

Preferred examples of the compound (I) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples further include a compound described in F. C. Schaefer et al., J. Org. Chem., 29, 1527 (1964), a compound described in JP-A-62-58241, a compound described in JP-A-5-281728, a compound described in German Pat. No. 2641100, a compound described in German Pat. No. 3333450, compounds described in German Pat. No. 3021590, and compounds described in German Pat. No. 3021599.

### Cationic polymerization initiator

In the ink composition of the present invention, when a cationically polymerizable compound is used in combination, it is preferable to use a cationic polymerization initiator in combination.

Firstly, B(C₆F₅)₄⁻, PF₆⁻, AsF₆⁻, SbF₆⁻, and CF₃SO₃⁻ salts of diazonium, ammonium, iodonium, sulfonium, phosphonium, etc. aromatic onium compounds can be cited. Secondly, sulfonated materials that generate a sulfonic acid can be cited. Thirdly, halides that photogenerate a hydrogen halide can also be used. Fourthly, iron arene complexes can be cited.

Examples [(b-1) to (b-96)] of cationic polymerization initiators that are suitably used in the present invention are listed below, but the present invention should not be construed as being limited thereby.

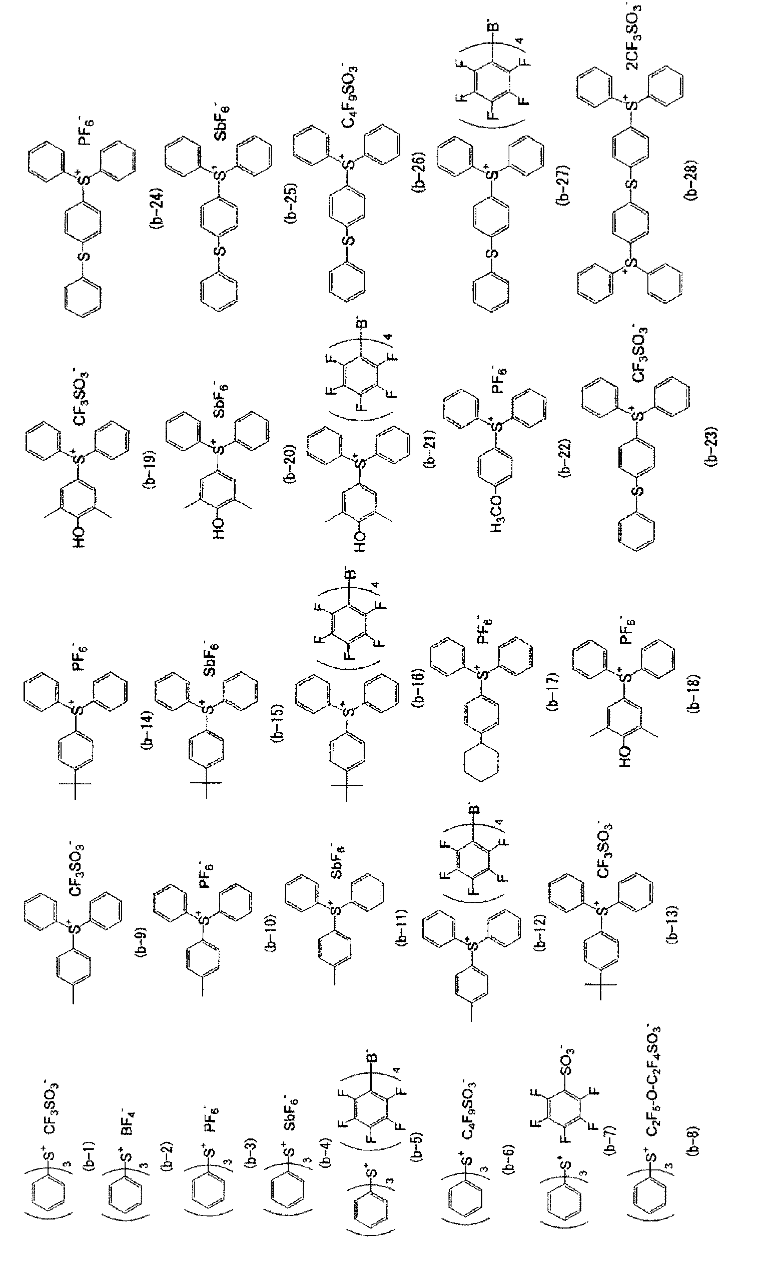

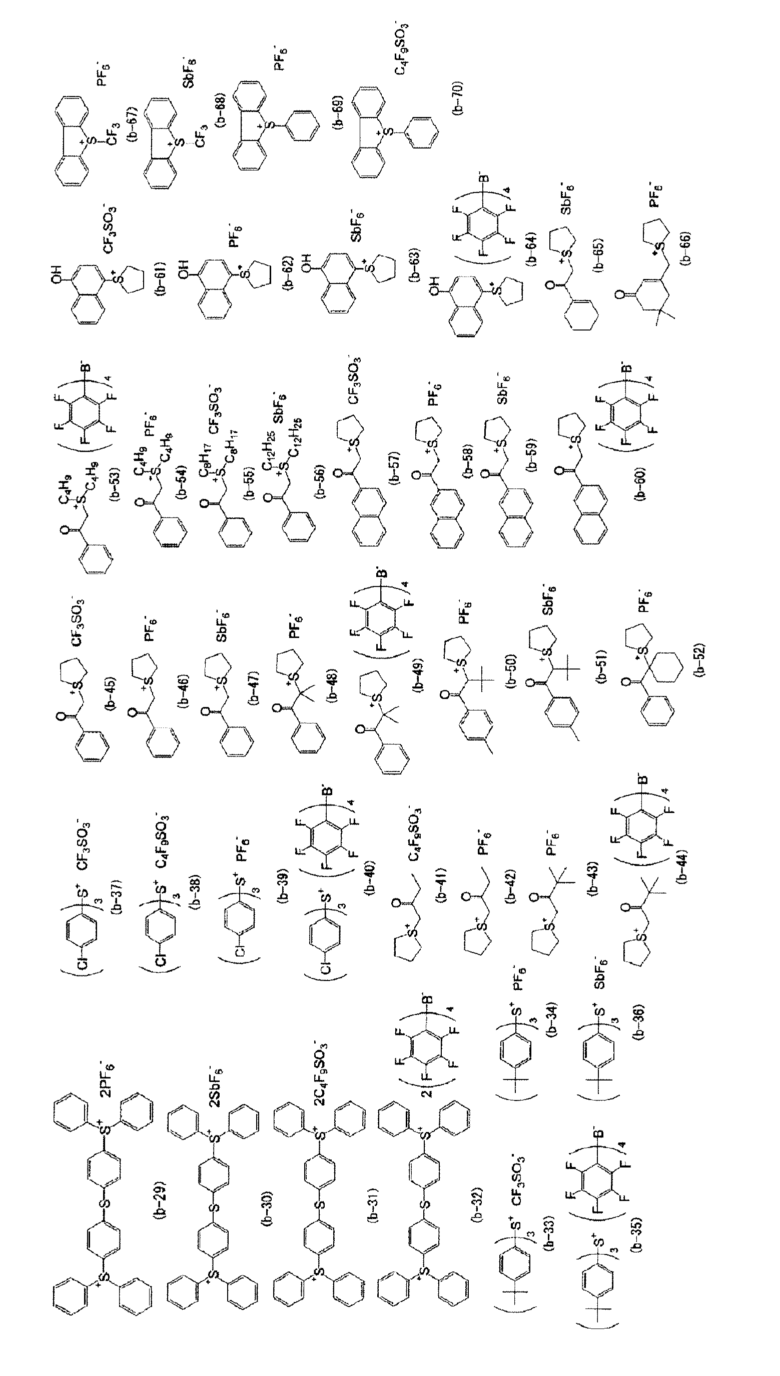

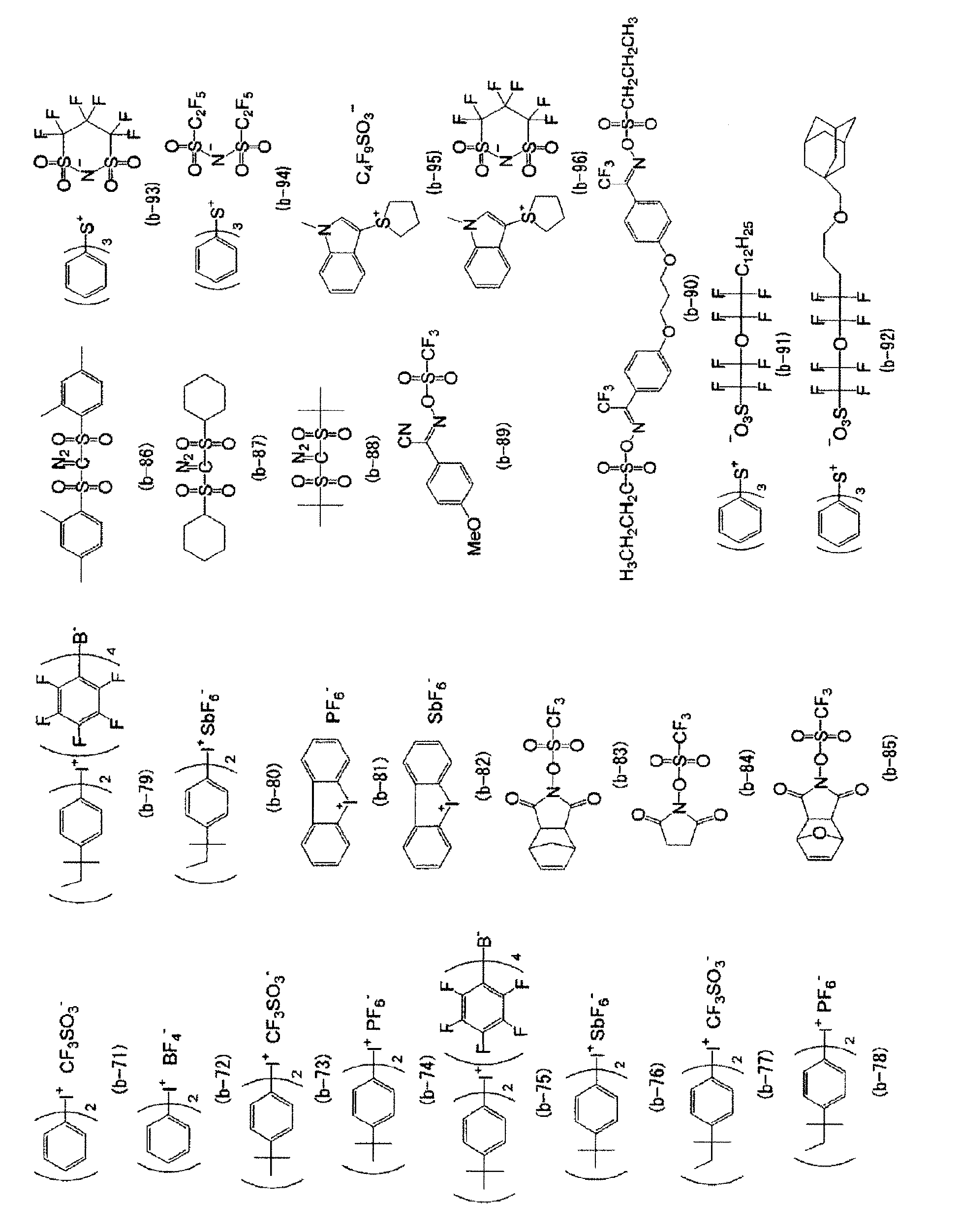

In the ink composition of the present invention, the total amount of polymerization initiator used is preferably 0.01 to 35 wt % relative to the total amount of polymerizable compound, including an N-vinyllactam, used, more preferably 0.5 to 20 wt %, and yet more preferably 1.0 to 15 wt %. The ink composition can be cured with 0.01 wt % or greater of the polymerization initiator, and a cured film having a uniform degree of curing can be obtained with 35 wt % or less, which is preferable.

Furthermore, when a sensitizing dye, which will be described later, is used in the ink composition of the present invention, the total amount of polymerization initiator used is preferably 200:1 to 1:200 relative to the sensitizing colorant as a ratio by weight of polymerization initiator : sensitizing dye, more preferably 50:1 to 1:50, and yet more preferably 20:1 to 1:5.

### Basic compound (D)

The ink composition of the present invention comprises a basic compound. By containing the basic compound, an ink composition having excellent long-term storage stability can be obtained.

The basic compound used in the present invention is not particularly limited, and it is possible to use either an inorganic basic compound or an organic basic compound, but it is preferable to use an organic basic compound.

It is preferable for the organic basic compound to have a higher basicity than phenol. The organic basic compound is preferably a nitrogen-containing organic basic compound, and more preferably an organic amine. In particular, it is preferable to use an organic amine containing a non-acid polar group such as a hydroxyl group, a cyano group, an ether group, or an amide group. It is also preferable to use an organic amine compound having at least two amino groups per molecule.

It is more preferable to use an organic amine compound having a polymerizable group. The use of an organic amine compound having a polymerizable group is particularly preferable since the organic amine compound also cures and does not remain in the film when the ink composition is cured by irradiation with actinic radiation. The polymerizable group is preferably a radical polymerizable group, and more preferably a group having an ethylenenically unsaturated bond. Specifically, the basic compound having a polymerizable group is preferably an organic amine compound having an ethylenenically unsaturated bond. Examples thereof include an acryloyloxy group, a methacryloyloxy group, a vinyl group, an acrylamide group, a methacrylamide group, an acryloyl group, and methacryloyl group. Among them, the basic compound (D) is particularly preferably an organic amine compound having a (meth)acryloyloxy group as a polymerizable group.

Preferred specific examples of the basic compound in the present invention include decylamine, dodecylamine, *N*,*N*-dimethyldodecylamine, stearylamine, cetylamine, benzylpiperidine, *N*,*N*-dimethylcyclohexylamine, mono-, di-, or triethanolamine, aminopropanol, aminobutanol, aminohexanol, dimethylaminohexanol, morpholine, aminoethylmorpholine, aminopropylmorpholine, aminoethylpiperazine, aminoethylpyrrolidine, bis(hydroxyethyl)piperazine, aminopropylpyrrolidinone, aminoethoxyethanol, dimethylaminoethylmorpholine, phenylmorpholine, 1,3-bis[1-(2-hydroxyethyl)-4-piperidyl]propane, gramine, 1-(2-phenethyl)-4-piperidone, ethylenediamine, trimethylenediamine, tetramethylenediamine, hexamethylenediamine, aniline, N,N-diethylaniline, dodecylaniline, aminobiphenyl, aminophenol, 4-aminoacetanilide, aminoacetophenone, aminobenzamide, aminobenzanilide, aminobenzophenone, aminopyridine, dimethylaminomethylthiophene, dimethylaminophenethyl alcohol, polyethyleneimine, polyarylamine, polyvinylpyridine, a copolymer of *N*,*N-*dimethylaminoethyl methacrylate and a methacrylic acid ester (e.g. butyl methacrylate), a copolymer of *N,N*-diethylaminoethyl methacrylate and an acrylic acid ester (e.g. ethyl acrylate), a copolymer of dimethylaminomethylstyrene and styrene, and a condensed polymer of 4-hydroxy-2,2,6,6-tetramethyl-1-piperidineethanol and 1,4-butanedioic acid.

It is also possible to use, as the amine having a polymerizable group, *N*,*N-*dimethylaminoethyl (meth)acrylate, *N*,*N*-diethylaminoethyl (meth)acrylate, and a so-called aminoacrylate in which a polyfunctional acrylate monomer or polyester acrylate is modified with an amine.

Amines having a polymerizable group are commercially available, and examples thereof include EBECRYL P115 and EBECRYL 7100 (Daicel-UCB Co., Ltd.), dimethylaminoethyl acrylate (DMA, Osaka Organic Chemical Industry Ltd.), dimethylaminoethyl methacrylate (Light-ester DM, Kyoeisha Chemical Co., Ltd.), and diethylaminoethyl methacrylate (Light-ester DE, Kyoeisha Chemical Co., Ltd.).

When the basic compound (D) has a polymerizable group, the basic compound is included in the other polymerizable compound (B). In this case, the above-mentioned content is preferably set based on a total amount so that the content of the other polymerizable compound (B) includes the basic compound having a polymerizable goup. When the basic compound having a polymerizable group comes within a monofunctional polymerization compound, the basic compound having a polymerizable group is included in the monofunctional polymerizable compound. More specifically, the total of monofunctional polymerizable compounds including a basic compound having a monofunctional polymerizable group is set at least 65 wt % of the total polymerizable compounds (the total of a basic compound having a polymerizable goup, N-vinyllactam, and the other polymerizable compound).

As nitrogen-containing organic basic compounds that can preferably be used as the basic compound, for example, the structures represented by (A) to (E) below can be cited.

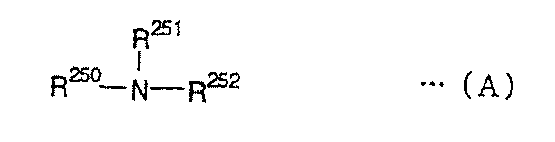

Here, R²⁵⁰, R²⁵¹, and R²⁵² independently denote a hydrogen atom, an alkyl group having 1 to 6 carbons, an aminoalkyl group having 1 to 6 carbons, a hydroxyalkyl group having 1 to 6 carbons, or a substituted or unsubstituted aryl group having 6 to 20 carbons, and R²⁵¹ and R²⁵² may be bonded to each other to form a ring.

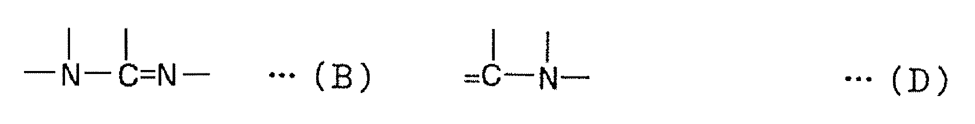

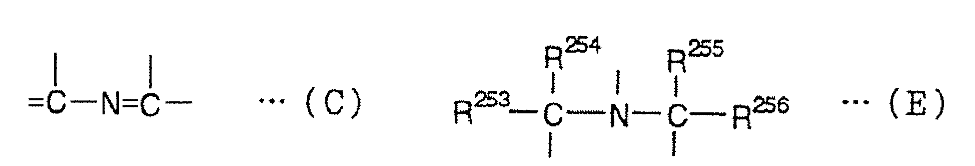

In the formulae, R²⁵³, R²⁵⁴, R²⁵⁵, and R²⁵⁶ independently denote an alkyl group having 1 to 6 carbons.

A more preferred compound is a nitrogen-containing basic compound having in one molecule at least two nitrogen atoms that are in different chemical environments, and a particularly preferred compound is a compound having both a substituted or unsubstituted amino group and a nitrogen-containing cyclic structure or a compound having an alkylamino group. Preferred specific examples thereof include a substituted or unsubstituted guanidine, a substituted or unsubstituted aminopyridine, a substituted or unsubstituted aminoalkylpyridine, a substituted or unsubstituted aminopyrrolidine, a substituted or unsubstituted indazole, a substituted or unsubstituted pyrazole, a substituted or unsubstituted pyrazine, a substituted or unsubstituted pyrimidine, a substituted or unsubstituted purine, a substituted or unsubstituted imidazoline, a substituted or unsubstituted pyrazoline, a substituted or unsubstituted piperazine, a substituted or unsubstituted aminomorpholine, and a substituted or unsubstituted aminoalkylmorpholine. Preferred substituents are an amino group, an aminoalkyl group, an alkylamino group, an aminoaryl group, an arylamino group, an alkyl group, an alkoxy group, an acyl group, an acyloxy group, an aryl group, an aryloxy group, a nitro group, a hydroxyl group, and a cyano group.

Preferred specific examples of the nitrogen-containing basic compound include guanidine, 1,1-dimethylguanidine, 1,1,3,3-tetramethylguanidine, 2-aminopyridine, 3-aminopyridine, 4-aminopyridine, 2-dimethylaminopyridine, 4-dimethylaminopyridine, 2-diethylaminopyridine, 2-(aminomethyl)pyridine, 2-amino-3-methylpyridine, 2-amino-4-methylpyridine, 2-amino-5-methylpyridine, 2-amino-6-methylpyridine, 3-aminoethylpyridine, 4-aminoethylpyridine, 3-aminopyrrolidine, piperazine, N-(2-aminoethyl)piperazine, N-(2-aminoethyl)piperidine, 4-amino-2,2,6,6-tetramethylpiperidine, 4-piperidinopiperidine, 2-iminopiperidine, 1-(2-aminoethyl)pyrrolidine, pyrazole, 3-amino-5-methylpyrazole, 5-amino-3-methyl-1-p-tolylpyrazole, pyrazine, 2-(aminomethyl)-5-methylpyrazine, pyrimidine, 2,4-diaminopyrimidine, 4,6-dihydroxypyrimidine, 2-pyrazoline, 3-pyrazoline, *N-*aminomorpholine, N-(2-aminoethyl)morpholine, 1,5-diazabicyclo[4.3.0]non-5-ene, 1,8-diazabicyclo[5.4.0]undec-7-ene, 1,4-diazabicyclo[2.2.2]octane, 2,4,5-triphenylimidazole, N-methylmorpholine, *N*-ethylmorpholine, *N-*hydroxyethylmorpholine, *N*-benzylmorpholine, and a tertiary morpholine derivative such as cyclohexylmorpholinoethylthiourea (CHMETU), but the examples are not limited thereto.

Furthermore, as an example of a nitrogen-containing basic compound that can be suitably used in the present invention, a hindered amine-based compound can be cited. The hindered amine-based compound can suitably be used since it also functions as a polymerization inhibitor.

The hindered amine-based compound is a compound having a moiety having a hindered amine structure in the molecule; examples thereof include those described in JP-A-61-91257, JP-A-11-52575 (e.g. those described in [0005] of the publication), and JP-A-2003-246138, and a representative compound thereof is a 2,2,6,6-tetramethylpiperidine derivative having a structure in which all the hydrogen atoms on the 2- and 6-carbons of the piperidine are replaced by methyl groups.

In the present invention, a hindered amine-based compound represented by Formula (II) below may preferably be used.

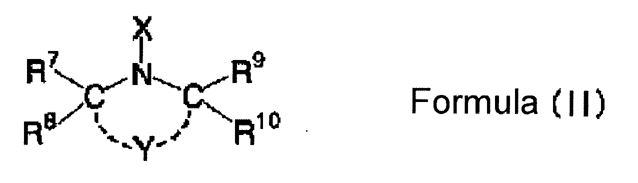

In Formula (II), Y denotes a non-metallic atomic group necessary for forming a 5- to 7-membered ring together with C and N. X denotes a hydrogen atom, an aliphatic group, an aromatic group, an acyl group, an alkylsulfonyl group, an arylsulfonyl group, an alkylsulfinyl group, an arylsulfinyl group, a hydroxyl group, an aliphatic group-substituted oxy group, an aromatic group-substituted oxy group, an acyloxy group, an alkylsulfonyloxy group, an arylsulfonyloxy group, or an oxy radical group. R⁷ to R¹⁰ may be identical to or different from each other and each denotes a hydrogen atom or an alkyl group. Here, any two groups of R⁷ to R¹⁰ and Y may be bonded to each other to form a 5- to 7-membered ring.

In Formula (II), preferred examples of the 5- to 7-membered ring formed by Y include a pyrrolidine ring, a piperazine ring, a morpholine ring, and a piperidine ring.

In Formula (II), examples of the aliphatic group denoted by X include an alkyl group, an alkenyl group, an alkynyl group, and an aralkyl group, and they may further have a substituent. The aliphatic group may be an open-chain aliphatic group or a cyclic aliphatic group, and the open-chain aliphatic group may further be branched. Among them, an alkyl group and a substituted alkyl group are particularly preferable. Examples of the alkyl group include a methyl group, an ethyl group, an *n*-propyl group, an isopropyl group, an *n*-butyl group, a *t*-butyl group, an *n*-octyl group, a benzyl group, and a hexadecyl group. Examples of the alkenyl group include an allyl group and an oleyl group, and examples of the alkynyl group include an ethynyl group. Examples of the aromatic group include an aryl group and a substituted aryl group, the aryl group preferably having 6 to 30 carbons, and more preferably 6 to 20 carbons. With regard to the number of carbons in the aryl moiety of the substituted aryl group, the above-mentioned range is also preferable. Specific examples of the aryl group include a phenyl group, an α-naphthyl group, and a β-naphthyl group. Examples of the acyl group include an acetyl group, a benzoyl group, and a pentanoyl group. The alkylsulfonyl group is preferably an alkylsulfonyl group having no greater than 30 carbons, and examples thereof include a methylsulfonyl group, a trifluoromethylsulfonyl group, an ethylsulfonyl group, a butylsulfonyl group, and a dodecylsulfonyl group. Examples of the arylsulfonyl group include a benzenesulfonyl group, a toluenesulfonyl group, and a naphthalenesulfonyl group. Examples of the alkylsulfinyl group include a methanesulfinyl group, and examples of the arylsulfinyl group include a benzenesulfinyl group. Examples of the aliphatic group-substituted oxy group include oxy groups substituted with an alkyl group, an alkenyl group, an alkynyl group, an aralkyl group, etc. Examples of the aromatic group-substituted oxy group include oxy groups substituted with an aryl group, a substituted aryl group, etc. Examples of the acyloxy group include an acetyloxy group and a benzoyloxy group.

R⁷ to R¹⁰ in Formula (II) denote a hydrogen atom or an alkyl group (this alkyl group is selected from the same range as for the alkyl group denoted by X above).

The compound represented by Formula (II) above may be synthesized easily in accordance with methods described in Journal of Synthetic Organic Chemistry, Japan, 29 (4), 366 (1971), JP-A-49-53571, JP-A-49-53572, JP-A-49-53573, JP-A-49-53574, JP-B-49-20974, EP-A-264,730, US Pat. No. 4,639,415, etc.

Furthermore, in the present invention, a hindered amine-based compound represented by Formula (III) below in particular may be preferably used.

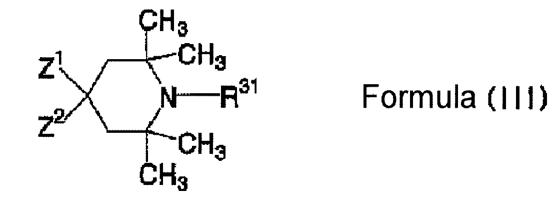

In Formula (III), R³¹ denotes a hydrogen atom, an aliphatic group, -OR³² (said R³² denotes a hydrogen atom, an aliphatic group, or an acyl group), -O-, or an acyl group. Z¹ denotes a hydrogen atom, -OR³³ (said R³³ denotes a hydrogen atom, an aliphatic group, an aromatic group, an alkoxycarbonyl group, an acyl group, or an aminocarbonyl group), -NR³⁴R³⁵ (said R³⁴ and R³⁵ independently denote a hydrogen atom, an aliphatic group, an aromatic group, an acyl group, an aminocarbonyl group, or a sulfonyl group), -COOR³⁶ (said R³⁶ denotes a hydrogen atom, an aliphatic group, or an aromatic group), a halogen atom, an aliphatic group, or an aromatic group. Z² denotes a hydrogen atom, an aliphatic group, an aromatic group, or **-OR**³⁷ (said R³⁷ denotes a hydrogen atom or an aliphatic group). Z¹ and Z² may form a carbonyl group in a form containing the carbon atom substituted by Z¹ and Z², or may be bonded to each other to form a cyclic structure. At least one of Z¹ and Z² may denote a group that may form a bond as a result of a reaction with a reactive group contained in a polymer, an oligomer, or a low molecular weight compound.

When R³¹ in Formula (III) denotes an aliphatic group, examples of this aliphatic group include an alkyl group, an alkenyl group, an alkynyl group, and an aralkyl group, and they may further have a substituent. Among them, an alkyl group, a substituted alkyl group, an alkenyl group, a substituted alkenyl group, an aralkyl group, and a substituted aralkyl group are preferable, and an alkyl group and a substituted alkyl group are particularly preferable. The aliphatic group may be an open-chain aliphatic group or a cyclic aliphatic group, and the open-chain aliphatic group may further be branched. Specific examples of R³¹ above include a hydrogen atom, a methyl group, an ethyl group, a butyl group, an octyl group, a hydroxy group, a methoxy group, an ethoxy group, a butoxy group, an octyloxy group, an acetyloxy group, a pivaloyloxy group, a benzoyloxy group, -O-, and an acetyl group. Among them, R³¹ is more preferably a hydrogen atom.

In Formula (III), Z¹ denotes a hydrogen atom, -OR³³ (said R³³ denotes a hydrogen atom, an aliphatic group, an aromatic group, an alkoxycarbonyl group, an acyl group, or an aminocarbonyl group), -NR³⁴R³⁵ (said R³⁴ and R³⁵ independently denote a hydrogen atom, an aliphatic group, an aromatic group, an acyl group, an aminocarbonyl group, or a sulfonyl group), -COOR³⁶ (said R³⁶ denotes a hydrogen atom, an aliphatic group, or an aromatic group), a halogen atom, an aliphatic group, or an aromatic group. In Formula (III), Z² denotes a hydrogen atom, an aliphatic group, an aromatic group, or -OR³⁷ (said R³⁷ denotes a hydrogen atom or an aliphatic group). Z¹ and Z² may form a carbonyl group in a form containing the carbon atom substituted by Z¹ and Z², or may be bonded to each other to form a cyclic structure. At least one of Z¹ and Z² may denote a group that may form a bond as a result of a reaction with a reactive group contained in a polymer, an oligomer, or a low molecular weight compound.

Specific examples of Z¹ include a hydrogen atom, a hydroxy group, a methoxy group, an ethoxy group, a propyloxy group, an octyloxy group, a phenoxyethoxy group, a phenoxy group, an acetyloxy group, a propionyloxy group, a pivaloyloxy group, a benzoyloxy group, a thienyloxy group, a methoxycarbonyloxy group, a butylaminocarbonyloxy group, a phenylaminocarbonyloxy group, an amino group, an ethylamino group, a dibutylamino group, a dioctylamino group, a phenylamino group, a diphenylamino group, a hydroxyethylamino group, a bis(hydroxyethyl)amino group, a cyanoethylamino group, a carboxyethylamino group, a methoxycarbonyloxyethylamino group, a chloropropylamino group, a methylsulfonylamino group, a phenylsulfonylamino group, a butylaminocarbonylamino group, a carboxyl group, a methoxycarbonyl group, a hydroxyethyloxycarbonyl group, a chlorine atom, a fluorine atom, a bromine atom, an iodine atom, a methyl group, an ethyl group, an octadecyl group, a phenyl group, a tolyl group, an epoxy group, a chloroacetylamino group, and a chloroacetyloxy group. Specific examples of Z² include a hydrogen atom, a methyl group, an ethyl group, a butyl group, an octyl group, a phenyl group, a naphthyl group, a hydroxy group, a methoxy group, and an ethoxy group.

Z¹ and Z² may form a carbonyl group in a form containing the carbon atom substituted by Z¹ and Z², or may be bonded to each other to form a 5- to 7-membered ring. At least one of Z¹ and Z² may form a bond as a result of a reaction with a reactive group contained in a polymer, an oligomer, or a low molecular weight compound. In this case, the hindered amine compound means a compound having at least two hindered amine frameworks per molecule. In this case, at least one of Z¹ and Z² is a hydroxy group, an acyloxy group substituted with a halogen atom or a sulfonic acid ester group, an amino group, an acylamino group substituted with a halogen atom or a sulfonic acid ester group, a carboxyl group, a carbonyl group, etc., and these substituents and a polymer, an oligomer, or a low molecular weight compound having a reactive group that can undergo an addition reaction such as an SN1, SN2, etc. nucleophilic substitution reaction, a salt forming reaction, a Michael reaction, or a reaction with an epoxy compound can form a polymeric, oligomeric, or low molecular weight hindered amine compound having at least two hindered amine frameworks per molecule.

Specific examples of the hindered amine-based compound represented by Formula (II) or Formula (III) are listed below, but the present invention is not limited thereby.

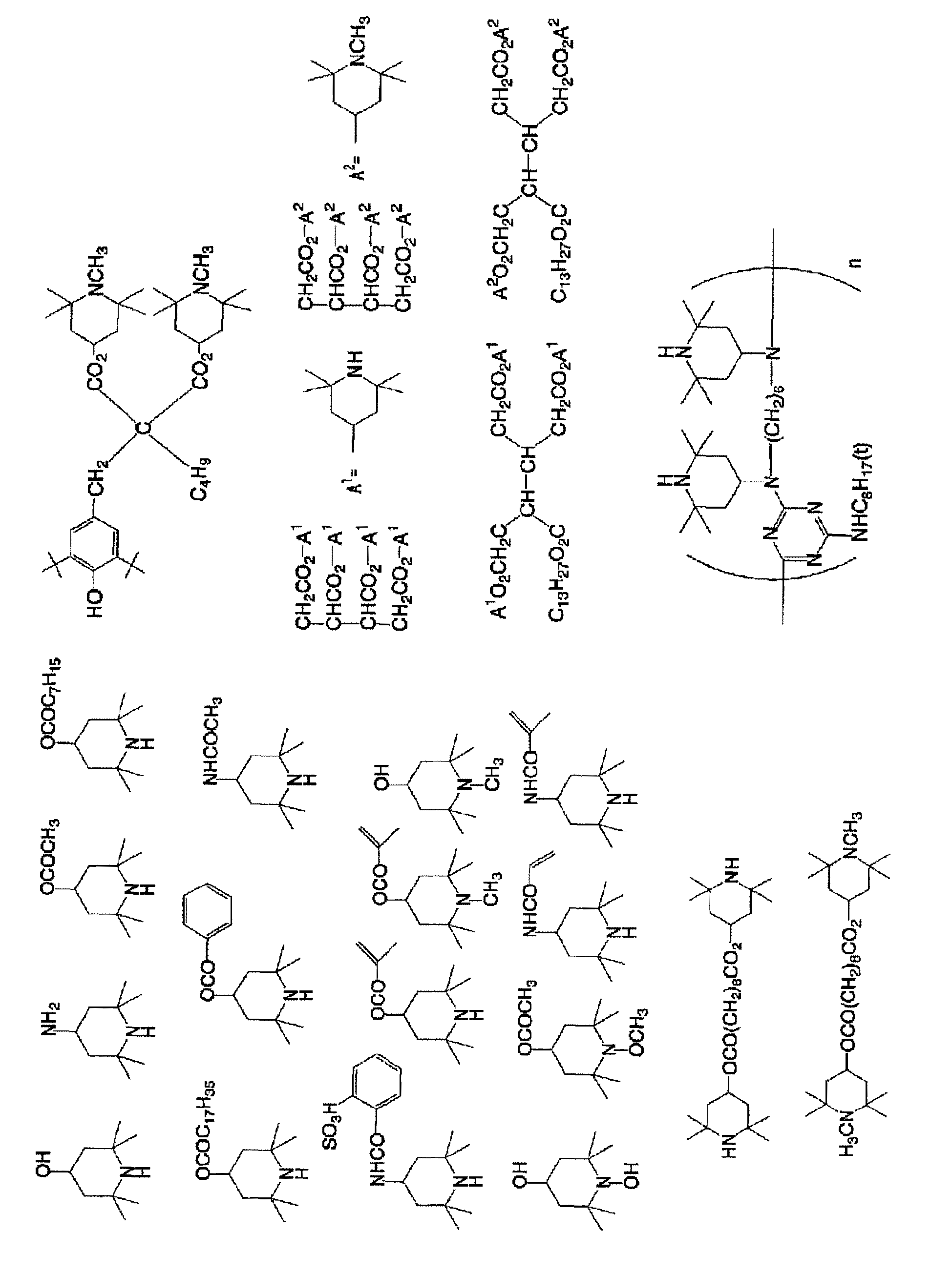

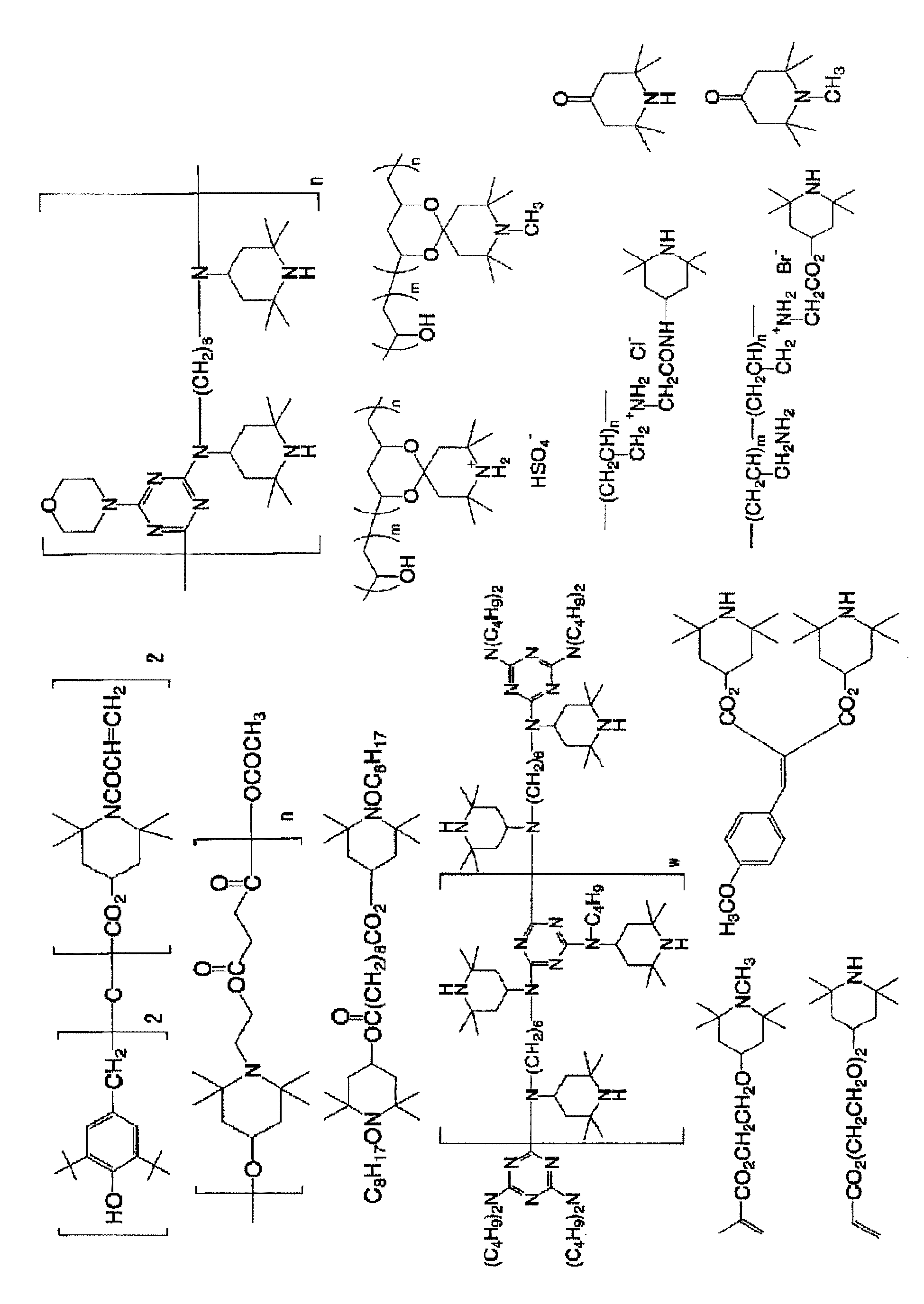

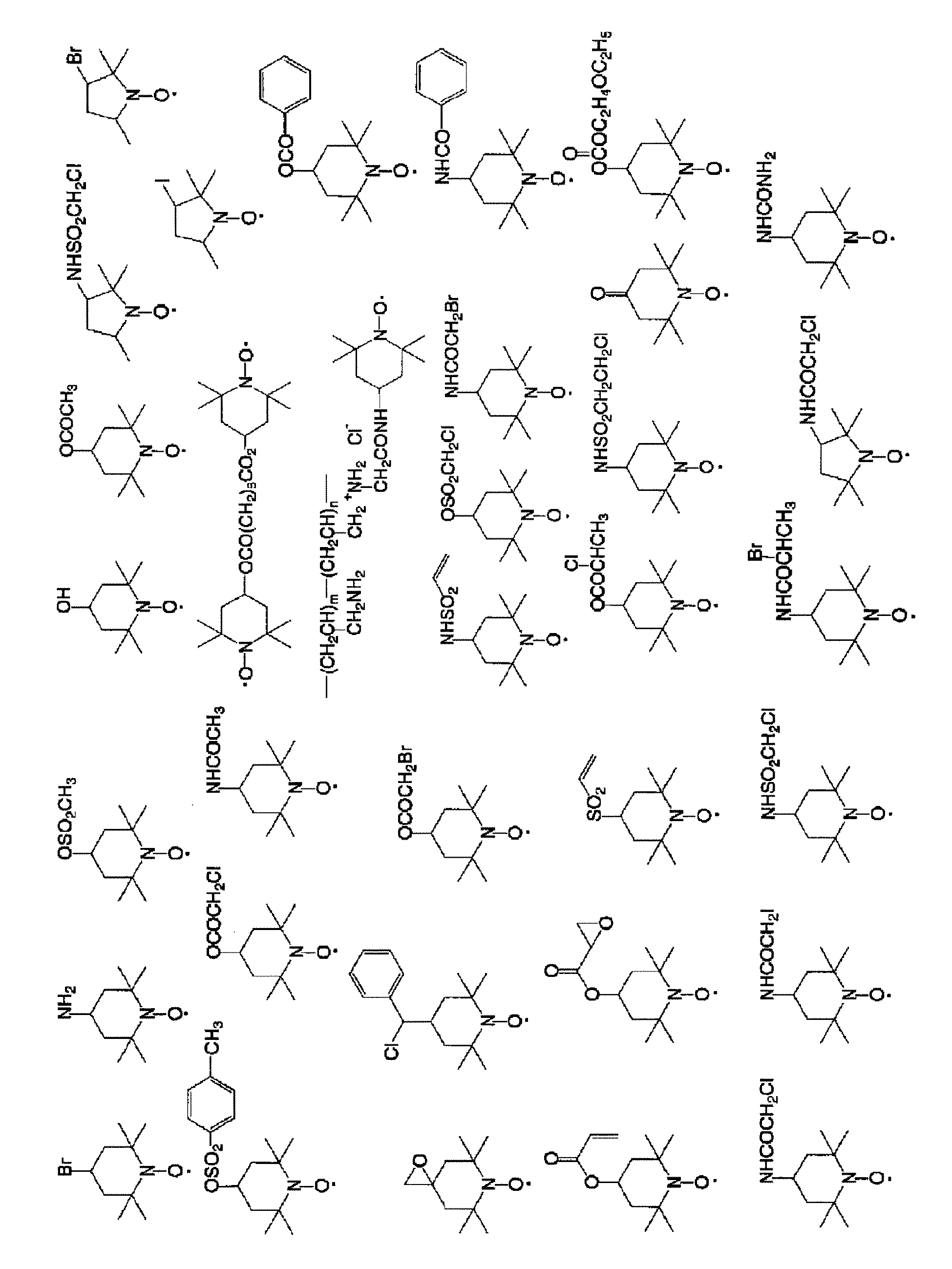

In the present invention, the basic compound may be used singly or in a combination of two or more types.

The content of the basic compound is preferably 0.001 to 10 wt % relative to the total weight of the ink composition, more preferably 0.005 to 8 wt %, and yet more preferably 0.01 to 5 wt %.

It is preferable for the content of the basic compound to be in the above-mentioned range since decomposition of the N-vinyllactam can be suppressed, thus improving the ink storage stability.

Furthermore, particularly when a hindered amine-based compound is used as the basic compound, the content of the hindered amine-based compound is preferably no greater than 5 wt %. It is preferable for the amount of hindered amine-based compound added to be no greater than 5 wt % since there is little polymerization inhibition action and the sensitivity is not degraded.

### (E) oil-soluble dye having an oxidation potential of equal to or higher than 1.0 V (vs. SCE)

The ink composition of the present invention contains an oil-soluble dye having an oxdantial potential (E) of equal to or higher than 1.0 V (vs. SCE) or higher.

The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble dye or an oil-soluble colorant, and among these the oil-soluble dye is preferable.

The oil-soluble dye that can be used in the present invention may be used singly or in a combination of two or more types. Furthermore, another colorant such as a water-soluble dye, a disperse dye, or a pigment may be contained as necessary in a range that does not interfere with the effects of the present invention.

Among the oil-soluble dyes that can be used in the present invention, as a yellow dye, any may be used. Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.

Among the oil-soluble dyes that can be used in the present invention, as a magenta dye, any may be used. Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes that can be used in the present invention, as a cyan dye, any may be used. Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta, and cyan only after a part of the chromophore dissociates, and in that case the counter cation may be an inorganic cation such as an alkali metal or ammonium, may be an organic cation such as pyridinium or a quaternary ammonium salt, or may be a polymer cation having the above cation as a partial structure.

Although not limited to the following, preferred specific examples thereof include Cl Solvent Black 3, 7, 27, 29, and 34; Cl Solvent Yellow 14, 16, 19, 29, 30, 56, 82, 93, and 162; Cl Solvent Red 1, 3, 8, 18, 24, 27, 43, 49, 51, 72, 73, 109, 122, 132, and 218; Cl Solvent Violet 3; Cl Solvent Blue 2, 11, 25, 35, 38, 67, and 70; Cl Solvent Green 3 and 7; and Cl Solvent Orange 2. Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

In the present invention, a disperse dye may be used in a range that can be dissolved in a water-immiscible organic solvent. Specific preferred examples of the disperse dye include Cl Disperse Yellow 5, 42, 54, 64, 79, 82, 83, 93, 99, 100, 119, 122, 124, 126, 160, 184:1, 186, 198, 199, 201, 204, 224, and 237; Cl Disperse Orange 13, 29, 31:1, 33, 49, 54, 55, 66, 73, 118, 119, and 163; Cl Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; Cl Disperse Violet 33; Cl Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and Cl Disperse Green 6:1 and 9.

Particularly preferred examples of the oil-soluble dye include azo and azomethine dyes represented by Formulae (1) and (2) below. Dyes represented by Formula (2) below are known, in the photographic material area, as dyes that are generated from a coupler and a developing agent by oxidation.

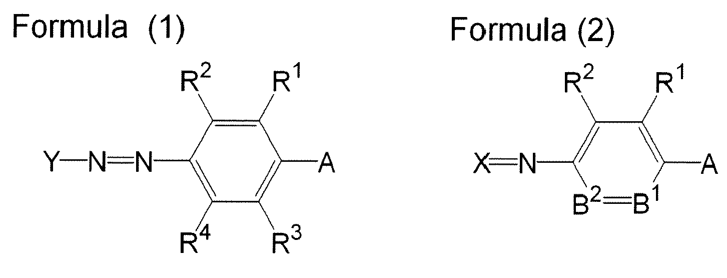

In Formulae (1) and (2) above, R¹, R², R³ and R⁴ independently denote a hydrogen atom, a halogen atom, an aliphatic group, an aromatic group, a heterocyclic group, a cyano group, a hydroxyl group, a nitro group, an amino group, an alkylamino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, a sulfonyl group, an alkoxycarbonyl group, a heterocyclooxy group, an azo group, an acyloxy group, a carbamoyloxy group, a silyloxy group, an aryloxycarbonyl group, an aryloxycarbonylamino group, an imide group, a heterocyclothio group, a sulfinyl group, a phosphoryl group, an acyl group, a carboxyl group, or a sulfo group.

In Formulae (1) and (2) above, in particular, R² is preferably, among the above-mentioned substituents, a hydrogen atom, a halogen atom, an aliphatic group, an alkoxy group, an aryloxy group, an amide group, an ureido group, a sulfamoylamino group, an alkoxycarbonylamino, or a sulfonamide group.

In the present specification, the aliphatic group denotes an alkyl group, a substituted alkyl group, an alkenyl group, a substituted alkenyl group, an alkynyl group, a substituted alkynyl group, an aralkyl group, or a substituted aralkyl group. The aliphatic group may have a branch or form a ring. The number of carbon atoms of the aliphatic group is preferably 1 to 20, and more preferably 1 to 18. The aryl moiety of the aralkyl group and the substituted aralkyl group is preferably phenyl or naphthyl, and particularly preferably phenyl. Examples of the substituents of the alkyl moieties of the substituted alkyl group, the substituted alkenyl group, the substituted alkynyl group, and the substituted aralkyl group include the substituents cited for explanation of R¹ to R⁴. Examples of the substituents of the aryl moiety of the substituted aralkyl group are the same as those of the substituent of the substituted aryl group below.

In the present specification, the aromatic group means an aryl group and a substituted aryl group. The aryl group is preferably phenyl or naphthyl, and particularly preferably phenyl. The aryl moiety of the substituted aryl group is the same as that of the above-mentioned aryl group. Examples of the substituent of the substituted aryl group include substituents cited for explanation of R¹ to R⁴.

In Formulae (1) and (2) above, A denotes -NR⁵R⁶ or a hydroxyl group, and R⁵ and R⁶ independently denote a hydrogen atom, an aliphatic group, an aromatic group, or a heterocyclic group. A is preferably -NR⁵R⁶. R⁵ and R⁶ may be bonded together to form a ring. R⁵ and R⁶ preferably each denote a hydrogen atom, an alkyl group, a substituted alkyl group, an aryl group, or a substituted aryl group, and most preferably a hydrogen atom, an alkyl group having 1 to 18 carbon atoms, or a substituted alkyl group having 1 to 18 carbon atoms.

In Formulae (1) and (2) above, B¹ denotes =C(R³)- or =N-, and B² denotes - C(R⁴)= or -N=. It is preferable that B¹ and B² are not -N= at the same time, and it is more preferable that B¹ is =C(R³)- and B² is -C(R⁴)=. Any of R¹ and R⁵, R³ and R⁶, and R¹ and R² may be bonded together to form an aromatic ring or a hetero ring.

In Formula (1) above, Y denotes an unsaturated heterocyclic group. Y is preferably a five-membered or six-membered unsaturated hetero ring. The hetero ring may be condensed with an aliphatic ring, an aromatic ring, or another hetero ring. Examples of the hetero atom of the hetero ring include N, O, and S.

Preferred examples of the above-mentioned unsaturated hetero ring include a pyrazole ring, an imidazole ring, a thiazole ring, an isothiazole ring, a thiadiazole ring, a thiophene ring, a benzothiazole ring, a benzoxazole ring, a benzoisothiazole ring, a pyrimidine ring, a pyridine ring, and a quinoline ring. It is also possible for the unsaturated heterocyclic group to have a substituent cited above as R¹ to R⁴.

In Formula (2) above, X denotes a color photographic coupler residue. Preferred examples of the color photographic coupler residue are as follows.

Yellow couplers: US Pat. Nos. 3,933,501, 4,022,620, 4,326,024, and 4,401,752, 4,248,961, JP-B-58-10739, GB Pat. Nos. 1,425,020 and 1,476,760, US. Pat. Nos. 3,973,968, 4,314,023, and 4,511,649, and couplers represented by Formulae (I) and (II) in EP Pat. Nos. 249,473A and 502,424A; couplers represented by Formulae (1) and (2) in EP Pat. No. 513,496A (in particular, Y-28 on page 18); couplers represented by Formula (I) of Claim 1 in EP Pat. No. 568,037A; couplers represented by Formula (I) of lines 45 to 55 in Column 1 in US Pat. No. 5,066,576; couplers represented by Formula (I) in Paragraph 0008 in JP-A-4-274425; couplers of Claim 1 on page 40 in EP Pat. No. 498,381A1 (in particular, D-35 on page 18); couplers represented by Formula (Y) on page 4 in EP Pat. No. 447,969A1 (in particular, Y-1 (page 17) and Y-54 (page 41)); and couplers represented by Formulae (II) to (IV) on lines 36 to 58 of Column 7 in US Pat. No. 4,476,219 (in particular, II-17 and 19 (Column 17), and II-24 (Column 19)).

Magenta couplers: US Pat. Nos. 4,310,619 and 4,351,897, EP Pat. No. 73,636, US Pat. Nos. 3,061,432 and 3,725,067, Research Disclosure No. 24220 (June, 1984) and No. 24230 (June, 1984), JP-A-60-33552, JP-A-60-43659, JP-A-61-72238, JP-A-60-35730, JP-A-55-118034, JP-A-60-185951, US Pat. Nos. 4,500,630, 4,540,654, and 4,556,630, WO88/04795, JP-A-3-39737 (L-57 (page 11, lower right), L-68 (page 12, lower right), L-77 (page 13, lower right)), EP Pat. No. 456,257 [A-4]-63 (p. 134), [A-4]-73, -75 (p. 139), EP Pat. No. 486,965 M-4, -6 (p. 26), M-7 (p. 27), EP Pat. No. 571,959A M-45 (p. 19), JP-A-5-204106 M-1 (p. 6), and JP-A-4-362631 paragraph No. 0237, M-22, and US Pat. Nos. 3,061,432 and 3,725,067.

Cyan coupler: US Pat. Nos. 4,052,212, 4,146,396, 4,228,233, and 4,296,200, EP Pat. No. 73,636, CX-1, 3, 4, 5, 11, 12, 14, 15 (pp. 14 to 16) in JP-A-4-204843; C-7, 10 (p. 35), 34, 35 (p. 37), (I-1), (I-17) (pp. 42 to 43) in JP-A-4-43345; and couplers represented by Formulae (la) or (lb) of Claim 1 in JP-A-6-67385.

In addition, couplers described in JP-A-62-215272 (page 91), JP-A-2-33144 (pages 3 and 30), and EP 355,660A (pages 4, 5, 45, and 47) are also useful.

Among the oil-soluble dyes represented by Formula (1) above, the magenta dyes particularly preferably used are dyes represented by Formula (3) below.

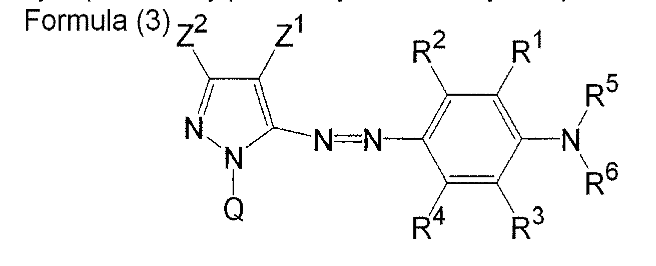

In Formula (3) above, Z¹ denotes an electron-attracting group having a Hammett substituent constant σp value of equal to or greater than 0.20. Z¹ is preferably an electron-attracting group having a σp value of at least 0.30 but no greater than 1.0. Preferred specific examples of the substituent include electron-attracting substituents that are described later, and among them an acyl group having 2 to 12 carbons, an alkyloxy carbonyl group having 2 to 12 carbons, a nitro group, a cyano group, an alkylsulfonyl group having 1 to 12 carbons, an arylsulfonyl group having 6 to 18 carbons, a carbamoyl group having 1 to 12 carbons, and a haloalkyl group having 1 to 12 carbons are preferable. A cyano group, an alkylsulfonyl group having 1 to 12 carbons, and an arylsulfonyl group having 6 to 18 carbons are particularly preferable, and a cyano group is most preferable.

In Formula (3) above, Z² denotes a hydrogen atom, an aliphatic group, or an aromatic group.

In Formula (3) above, R¹ to R⁶ are the same as the corresponding ones of Formula (1) above.

In Formula (3) above, Q denotes a hydrogen atom, an aliphatic group, an aromatic group, or a heterocyclic group. Among them, Q is preferably a group formed from a group of non-metal atoms necessary to form a 5- to 8-membered ring. Among them an aromatic group and a heterocyclic group are particularly preferable. The 5- to 8-membered ring may be substituted, may be a saturated ring, or may have an unsaturated bond. Preferred examples of the non-metal atom include a nitrogen atom, an oxygen atom, a sulfur atom, and a carbon atom. Specific examples of such ring structures include a benzene ring, a cyclopentane ring, a cyclohexane ring, a cycloheptane ring, a cyclooctane ring, a cyclohexene ring, a pyridine ring, a pyrimidine ring, a pyrazine ring, a pyridazine ring, a triazine ring, an imidazole ring, a benzoimidazole ring, an oxazole ring, a benzoxazole ring, an oxane ring, a sulfolane ring, and a thiane ring, and in a case where these rings have a further substituent, examples of the substituent include groups cited as examples of substituents R¹ to R⁴ in Formula (1) above.

Preferred structures of the compounds represented by Formula (3) above are described in JP-A-2001-335714.

Among the dyes represented by Formula (2) above, the magenta dye particularly preferably employs a dye represented by Formula (4) below.

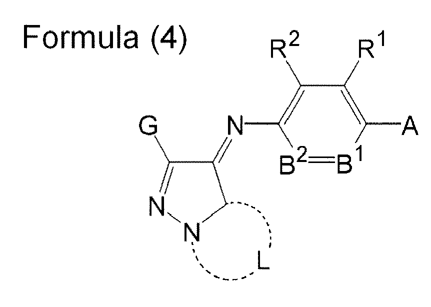

In Formula (4) above, G denotes a hydrogen atom, an aliphatic group, an aromatic group, a heterocyclic group, a cyano group, an alkoxy group, an aryloxy group, an alkylthio group, an arylthio group, an ester group, an amino group, a carbamoyl group, a sulfonyl group, a sulfamoyl group, a ureido group, a urethane group, an acyl group, an amide group, or a sulfonamide group.

In Formula (4) above, R¹, R², A, B¹, and B² are the same as the corresponding ones of Formula (2) above, and preferred ranges are also the same.

In Formula (4) above, L denotes an atomic group forming a five-membered or six-membered nitrogen-containing hetero ring, which may be substituted with at least one of an aliphatic group, an aromatic group, a heterocyclic group, a cyano group, an alkoxy group, an aryloxy group, an alkylthio group, an arylthio group, an ester group, an amino group, a carbamoyl group, a sulfonyl group, a sulfamoyl group, a ureido group, a urethane group, an acyl group, an amide group, and a sulfonamide group, and this hetero ring may further form a condensed ring with another ring.

With regard to compounds represented by Formula (4) above, A is preferably -NR⁵R⁶, and L preferably forms a five-membered nitrogen-containing hetero ring; examples of the five-membered nitrogen-containing hetero ring include an imidazole ring, a triazole ring, and a tetrazole ring.

Among the dyes represented by Formula (1) and Formula (2) above, compound examples (M-0 to 6, a-21 to 25) for a magenta dye are shown below, but these are only for explaining the present invention in detail, and the present invention should not be construed as being limited thereto.

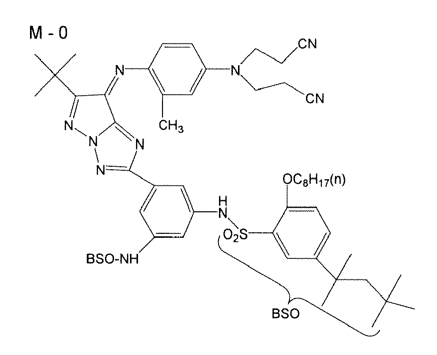

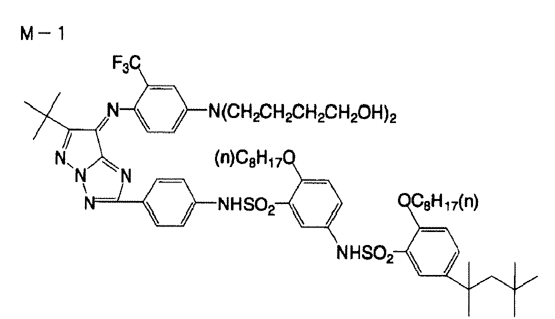

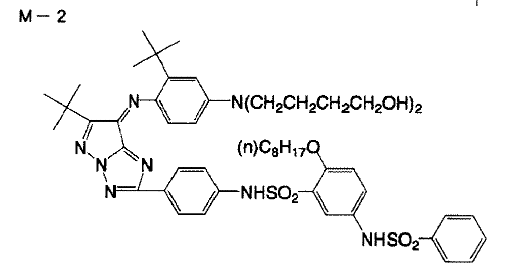

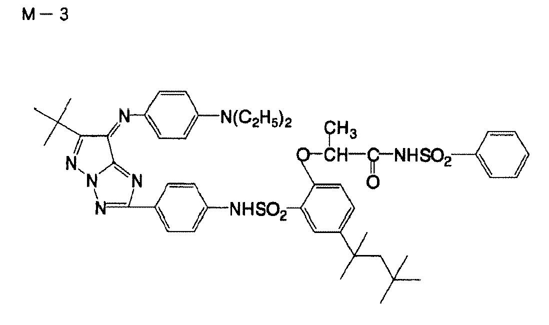

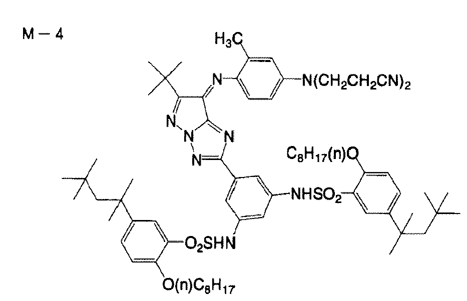

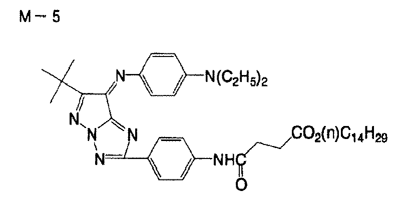

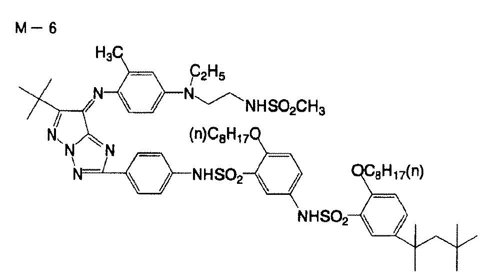

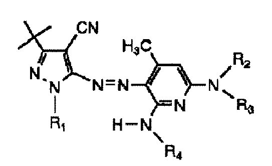

| Dye | R₁ | R₂ | R₃ | R₄ |
|---|---|---|---|---|
| a-21 | 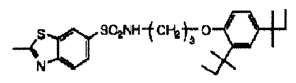 | 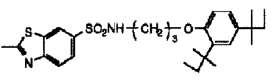 | 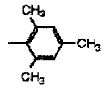 | 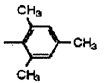 |
| a-22 | 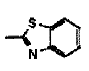 | 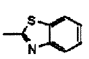 | 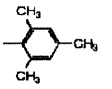 | 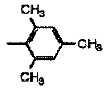 |
| a-23 | 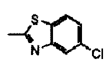 | 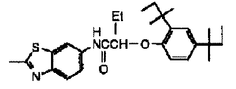 | 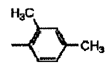 | 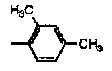 |
| a-24 | 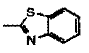 | 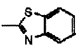 | 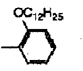 | 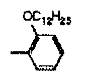 |
| a-25 | 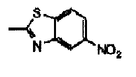 | 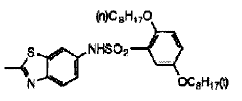 | 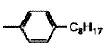 | |

Other compound examples of the oil-soluble dye that can be used in the present invention include those described in JP-A-2001-240763, 2001-181549, and JP-A-2001-335714, but the present invention should not be construed as being limited thereto.

The compound represented by Formula (3) above may be synthesized by reference to a method described in, for example, JP-A-2001-335714 or JP-A-55-161856. The compound represented by Formula (4) above may be synthesized by reference to a method described in, for example, JP-A-4-126772, JP-B-7-94180, or JP-A-2001-240763.

Among the dyes represented by Formula (2) above, as a cyan dye a pyrrolotriazole azomethine dye represented by Formula (5) below is particularly preferably used.

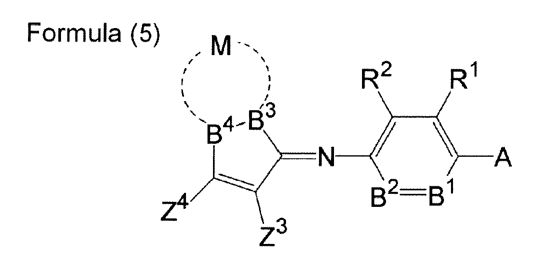

In Formula (5) above, A, R¹, R², B¹, and B² are the same as the corresponding ones of Formula (2) above, and preferred ranges thereof are also the same.

In Formula (5) above, Z³ and Z⁴ are independently the same as G in Formula (4) above. Z³ and Z⁴ may be bonded together to form a ring structure. One in which Z³ is an electron-attracting group having a Hammett substituent constant σp value of equal to or greater than 0.30 exhibits a sharp absorption and is more preferable. Moreover, one in which Z³ is an electron-attracting group having a Hammett substituent constant σp value of equal to or greater than 0.45 is more preferable, and an electron-attracting group having a Hammett substituent constant σp value of equal to or greater than 0.60 is most preferable. Furthermore, one in which the sum of the Hammett substituent constant σp values of Z³ and Z⁴ is equal to or greater than 0.70 exhibits excellent hue of a cyan color, and is more preferable.

In Formula (5) above, M is an atomic group forming a 1,2,4-triazole ring that is condensed with the 5-membered ring of Formula (5) above; either one of the two atoms B³ and B⁴ at the sites of condensation with the 5-membered ring is a nitrogen atom, and the other is a carbon atom.

The compound represented by Formula (5) above is preferably used as a cyan dye, but it may be used as a magenta dye by changing a substituent.

The Hammett substituent constant σp value used in the present specification is now explained. The Hammett rule is an empirical rule proposed by L. P. Hammett in 1935 in order to quantitatively deal with the influence of a substituent on a reaction or equilibrium of a benzene derivative, and the validity thereof is currently widely recognized. A σp value and a σm value are required for the substituent constant in the Hammett rule, and details of these values can be referred to in many general books, for example, 'Lange's Handbook of Chemistry', Ed. by J. A. Dean, 12th edition, 1979 (Mc Graw-Hill) or 'Kagakuno Ryouiki' (Journal of Japanese Chemistry), special issue, 122, pp. 96 to 103, 1979 (Nankodo Co., Ltd.). In the present invention, the substituents are limited or explained using the Hammett substituent constant σp, but this does not mean that they are limited to substituents whose values are described in published references, and a substituent whose value is not published in the references but is included in the range if it is measured in accordance with the Hammett rule is of course included. Among Formulae (1) to (5) above, those that are not benzene derivatives are also included, but the σp value is used as a scale showing the electronic effect of the substituent, irrespective of the position of substitution. The σp value in the present invention is used with the above-mentioned meaning.

Examples of electron-attracting groups having a Hammett substituent constant σp value of equal to or greater than 0.60 include a cyano group, a nitro group, an alkylsulfonyl group (e.g. a methanesulfonyl group), and an arylsulfonyl group (e.g. a benzenesulfonyl group). Examples of electron-attracting groups having a Hammett σp value of equal to or greater than 0.45 include, in addition to the above, an acyl group (e.g. an acetyl group), an alkoxycarbonyl group (e.g. a dodecyloxycarbonyl group), an aryloxycarbonyl group (e.g. m-chlorophenoxycarbonyl), an alkylsulfinyl group (e.g. *n*-propylsulfinyl), an arylsulfinyl group (e.g. phenylsulfinyl), a sulfamoyl group (e.g. *N*-ethylsulfamoyl, *N*,*N*-dimethylsulfamoyl), and a haloalkyl group (e.g. trifluoromethyl).

Examples of electron-attracting groups having a Hammett substituent constant σp value of equal to or greater than 0.30 include, in addition to the above, an acyloxy group (e.g. acetoxy), a carbamoyl group (e.g. *N-*ethylcarbamoyl, N,N-dibutylcarbamoyl), a haloalkoxy group (e.g. trifluoromethyloxy), a haloaryloxy group (e.g. pentafluorophenyloxy), a sulfonyloxy group (e.g. a methylsulfonyloxy group), a haloalkylthio group (e.g. difluoromethylthio), an aryl group substituted with two or more electron-attracting groups having a σp value of equal to or greater than 0.15 (e.g. 2,4-dinitrophenyl, pentachlorophenyl), and a hetero ring (e.g. 2-benzooxazolyl, 2-benzothiazolyl, 1-phenyl-2-benzimidazolyl). Specific examples of electron-attracting groups having a σp value of equal to or greater than 0.20 include, in addition to the above, include a halogen atom.

Furthermore, in the present invention, an oil-soluble dye represented by Formula (A-I) below can be used preferably.

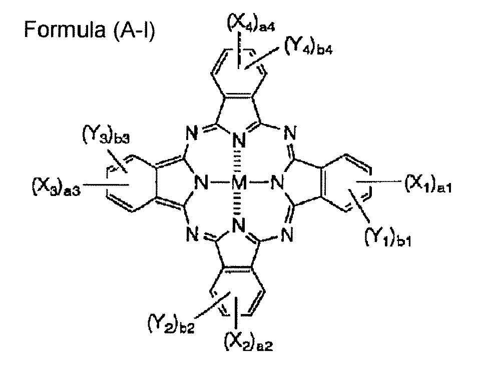

In Formula (A-I): x₁, X₂, X₃, and X₄ independently denote a group selected from -SO-Z, -SO₂-Z, -SO₂NR₁R₂, -CONR₁R₂, -CO₂R₁, and a sulfo group. Here, Z denotes a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group. R₁ and R₂ independently denote a hydrogen atom, a substituted or unsubstituted alkyl group, a substituted or unsubstituted cycloalkyl group, a substituted or unsubstituted alkenyl group, a substituted or unsubstituted aralkyl group, a substituted or unsubstituted aryl group, or a substituted or unsubstituted heterocyclic group, provided that R₁ and R₂ are not both hydrogen atoms. M denotes a hydrogen atom, a metal element, a metal oxide, a metal hydroxide, or a metal halide. Y₁, Y₂, Y₃, and Y₄ independently denote a hydrogen atom or a monovalent substituent. a1 to a4 and b1 to b4 denote the numbers of X₁ to X₄ and Y₁ to Y₄, and independently denote an integer of 0 to 4, provided that the sum total of a1 to a4 is equal to or greater than 2.

Among the oil-soluble dyes represented by Formula (A-I) above, an oil-soluble dye represented by Formula (A-II) below may particularly preferably be used.

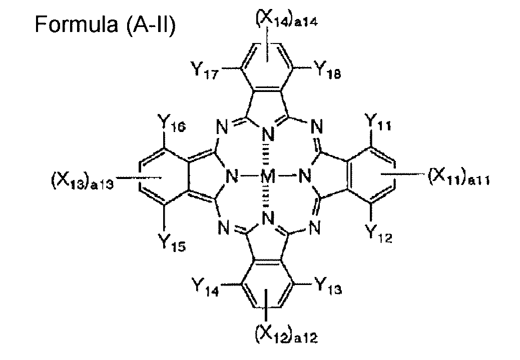

In Formula (A-II): X₁₁ to X₁₄, Y₁₁ to Y₁₈, and M are the same as X₁ to X₄, Y₁ to Y₄, and M in Formula (A-I) respectively. a11 to a14 independently denote an integer of 1 or 2.

As a specific example of Formula (A-II) above, a compound example (All-17 to 23) is cited, but this is for explaining the present invention in detail, and the present invention should not be construed as being limited thereto.

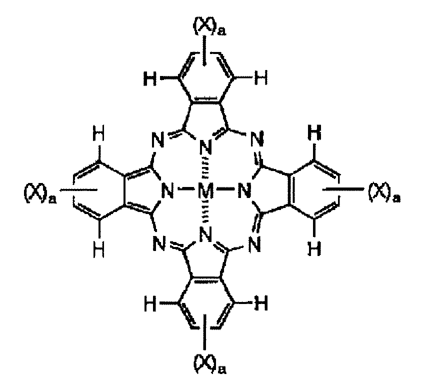

| Compound No. | M | X | a |
|---|---|---|---|
| AII-17 | Cu | 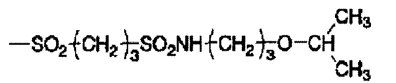 | 1 |
| AII-18 | Cu | 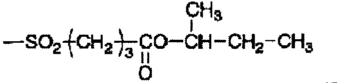 | 1 |
| AII-19 | Cu | 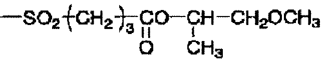 | 1 |
| AII-20 | Cu | 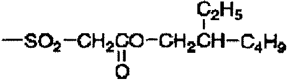 | 1 |
| AII-21 | Cu | 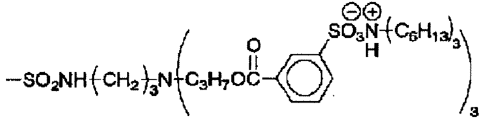 | 1 |
| AII-22 | Cu | 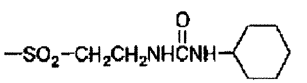 | 1 |
| AII-23 | Cu | 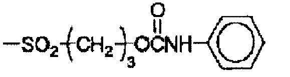 | 1 |

Examples of a yellow dye is cited, but this is for explaining the present invention in detail, and the present invention should not be construed as being limited thereto.

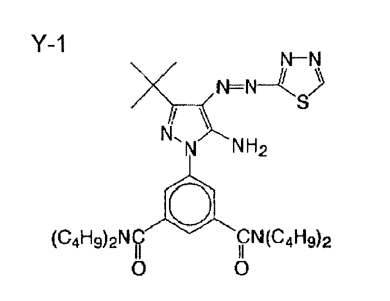

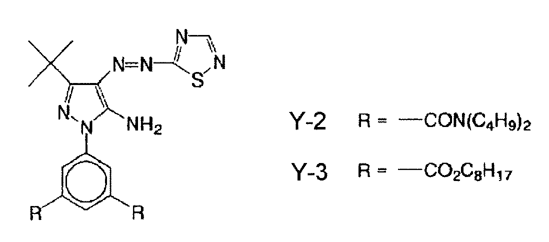

In the present invention, an oil-soluble dye having an oxidation potential that is equal to or higher than 1.0 V (SCE) is used. The higher the oxidation potential, the more preferable it is; it is preferable to use one having an oxidation potential of equal to or higher than 1.1 V (SCE), and it is yet more preferable to use one having an oxidation potential of equal to or higher than 1.2 V (SCE).

The oxidation potential value (Eox) can be easily measured by one skilled in the art and a method therefor is described in, for example, P. Delahay, 'New Instrumental Methods in Electrochemistry', Interscience Publishers (1954), A. J. Bard et al., 'Electrochemical Methods', John Wiley & Sons (1980), and Akira Fujishima et al., 'Denkikagaku Sokuteihou' (Electrochemical Measurement Methods), Gihodo Shuppan Sha (1984).

More specifically, a test sample is dissolved to give a concentration of 1 x 10⁻⁴ to 1 x 10⁻⁶ mol/L in a solvent such as dimethylformamide or acetonitrile containing a supporting electrolyte such as sodium perchlorate or tetrapropylammonium perchlorate, an oxidation wave when sweeping toward the oxidation side (high side) using carbon (GC) as a working electrode and a rotating platinum electrode as the counter electrode using cyclic voltammetry or direct current polarographic equipment is approximated to a straight line, and the oxidation potential of the midpoint of a line segment formed between an intersection point of the straight line and a residual current/potential straight line and an intersection point of the straight line and a saturated current straight line (or an intersection point with a straight line parallel to the ordinate passing through the potential peak value) is measured as a value relative to the SCE (saturated calomel electrode). This value sometimes deviates by on the order of tens of millivolts due to the effect of a liquid junction potential, the liquid resistance of the sample solution, or the like, but the reproducibility of the potential can be guaranteed by adding a standard sample (for example, hydroquinone). The support electrolyte and solvent used may be selected appropriately according to the oxidation potential and the solubility of the test sample. The support electrolyte and solvent that can be used here may be referred to in Akira Fujishima et al., 'Denkikagaku Sokuteihou' (Electrochemical Measurement Methods), Gihodo Shuppan Sha (1984), pp. 101 to 118.

In the concentration range of the above-mentioned measurement solvent and a phthalocyanine compound sample, the oxidation potential of a dissociated state is measured.

The value of Eox represents the ease of electron transfer from a sample to an electrode; the larger the value (the higher the oxidation potential), the more difficult it is for electrons to transfer from the sample to the electrode, in other words, the more difficult it is to oxidize.

If a dye having a low oxidation potential is used, polymerization is greatly inhibited by the dye, and the curability is degraded. When a dye having a high oxidation potential is used, there is hardly any inhibition of polymerization.

Among these oil-soluble dyes, the compounds below are suitably used.

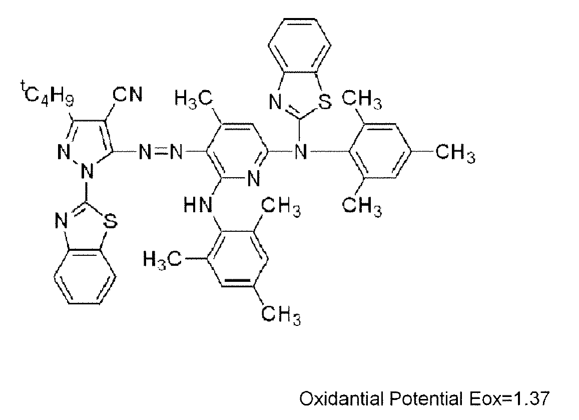

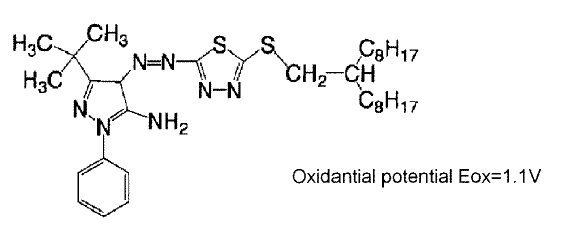

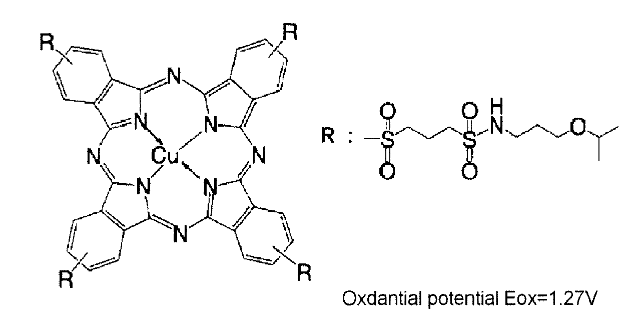

The oil-soluble dye may be added directly to the ink composition of the present invention, but in order to improve dispersibility it may be added in advance to a solvent or a dispersing medium such as a polymerizable compound used in the present invention. In the present invention, in order to avoid the problem of the solvent resistance being degraded when the solvent remains in the cured image and the VOC (Volatile Organic Compound) problem of the residual solvent, it is preferable to add the oil-soluble dye to a polymerizable compound. As a polymerizable compound used, it is preferable in terms of dispersion suitability to select a monomer having the lowest viscosity.

The content of an oil-soluble dye having an oxidation potential of equal to or higher than 1.0 V (vs. SCE) in the ink composition in the present invention is preferably 0.1 to 25 wt %, more preferably 0.5 to 20 wt % and yet more preferably 2 to 15 wt %. In the range above, high enough color density and excellent color tone can be obtained.

Furthermore, when an oil-soluble dye is used as a colorant, other water-soluble dye, a disperse dye or a pigment may be used therewith as necessary in a range that does not interfere with the effects of the present invention.

In the present invention, a disperse dye may be used in a range that can be dissolved in a water-immiscible organic solvent. A disperse dye generally includes a water-soluble dye, but in the present invention it is preferable for the disperse dye to be used in a range such that it dissolves in a water-immiscible organic solvent. Specific preferred examples of the disperse dye include Cl Disperse Yellow 5, 42, 54, 64, 79, 82, 83, 93, 99, 100, 119, 122, 124, 126, 160, 184:1, 186, 198, 199, 201, 204, 224, and 237; Cl Disperse Orange 13, 29, 31:1, 33, 49, 54, 55, 66, 73, 118, 119, and 163; Cl Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; Cl Disperse Violet 33; Cl Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and Cl Disperse Green 6:1 and 9.

### Pigment

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;
as a blue or cyan pigment, Pigment Blue 1, 15, 15:1, 15:2, 15:3, 15:4, 15:6, 16, 17-1, 22, 27, 28, 29, 36, or 60;
as a green pigment, Pigment Green 7, 26, 36, or 50;
as a yellow pigment, Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, or 193;
as a black pigment, Pigment Black 7, 28, or 26;
as a white pigment, Pigment White 6, 18, or 21, etc. may be used according to the intended application.

### Other component

The ink composition of the present invention may comprise another component as necessary. Examples of the other component include a dispersant, a surfactant, a sensitizing colorant, a cosensitizer, a UV absorber, an antioxidant, an antifading agent, a conductive salt, a solvent, and a polymer compound.

### Dispersant

It is preferable to add a dispersant when dispersing the colorant. The type of dispersant is not particularly limited, but it is preferable to use a polymeric dispersant.

The polymeric dispersant referred to in the present invention means a dispersant having a molecular weight (a weight-average molecular weight for one having a molecular weight distribution) of 1,000 or greater. The polymeric dispersant preferably has a molecular weight of 1,000 to 100,000, more preferably 2,000 to 50,000 and particularly preferably 3,000 to 20,000.

Furthermore, in the present invention, it is particularly preferable to use a basic dispersant as the polymeric dispersant. As the basic polymeric dispersant, a known polymeric dispersant having a basic functional group may broadly be used.

Examples of the basic functional group include a primary, secondary, or tertiary amino group, and a nitrogen-containing hetero ring such as pyridine, pyrimidine, or pyrazine. A fatty acid amine-based dispersant may particularly preferably be used.

In the present invention, it is particularly preferable for the dispersant to be a compound having an amine value that is larger than its acid value.

The amine value referred to here means the total amount of primary, secondary, and tertiary amines, and is expressed as the number of mg of KOH equivalent to the hydrochloric acid necessary for neutralizing 1 g of a sample. The acid value referred to here is expressed as the number of mg of KOH necessary for neutralizing a free fatty acid, a resin acid, etc. contained in 1 g of a sample.

In the present invention, the difference between the acid value and the amine value of the dispersant is preferably at least 5 mg KOH/g.

Specific examples of the basic polymeric dispersant include Disper BYK-161 (amine value 11 mg KOH/g, acid value 0 mg KOH/g), Disper BYK-162 (amine value 13 mg KOH/g, acid value 0 mg KOH/g), Disper BYK-163 (amine value 10 mg KOH/g, acid value 0 mg KOH/g), Disper BYK-164 (amine value 18 mg KOH/g, acid value 0 mg KOH/g), Disper BYK-166 (amine value 20 mg KOH/g, acid value 0 mg KOH/g), Disper BYK-167 (amine value 13 mg KOH/g, acid value 0 mg KOH/g), Disper BYK-168 (amine value 10 mg KOH/g, acid value 0 mg KOH/g), and Disper BYK-182 (amine value 13 mg KOH/g, acid value 0 mg KOH/g) (all manufactured by BYK Chemie), EFKA4046 (amine value 17 to 21 mg KOH/g, acid value 0 mg KOH/g), EFKA4060 (amine value 6 to 10 mg KOH/g, acid value 0 mg KOH/g), EFKA4080 (amine value 3.6 to 4.1 mg KOH/g, acid value 0 mg KOH/g), EFKA4800 (amine value 37 to 43 mg KOH/g, acid value 0 mg KOH/g), and EFKA7462 (amine value 8 mg KOH/g, acid value 0 mg KOH/g) (all manufactured by EFKA Additives), various types of Solsperse dispersant such as Solsperse 13240 (basic dispersant), Solsperse 13940 (basic dispersant), Solsperse 24000 (amine value 47 mg KOH/g, acid value 24 mg KOH/g), Solsperse 28000 (basic dispersant), and Solsperse 32000 (amine value 27.1 mg KOH/g, acid value 24.8 mg KOH/g) (all manufactured by Zeneca), and Disparlon DA-234 (amine value 20 mg KOH/g, acid value 16 mg KOH/g) and Disparlon DA-325 (amine value 20 mg KOH/g, acid value 14 mg KOH/g) (both manufactured by Kusumoto Chemicals, Ltd.).

The basic dispersant may be used on its own as the basic compound (D), but it is preferably used in combination with the basic compound (D). In this case, the stability of the *N*-vinyllactam improves, and the long-term storage stability of the ink composition improves, which is preferable.

Another known dispersant may also be used. Specific examples thereof include polymeric dispersants such as Disper BYK-101, Disper BYK-102, Disper BYK-103, Disper BYK-106, Disper BYK-111, Disper BYK-170, Disper BYK-171, and Disper BYK-174 (all manufactured by BYK Chemie), and EFKA4010 and EFKA5010 (both manufactured by EFKA Additives); various types of Solsperse dispersants such as Solsperse 3000, 26000, 36000, 39000, 41000, and 71000 (all manufactured by Zeneca); Adeka Pluronic L31, F38, L42, L44, L61, L64, F68, L72, P95, F77, P84, F87, P94, L101, P103, F108, L121, and P-123 (manufactured by Adeka Corporation), and Disparlon KS-860 and 873SN (polymeric dispersants), #2150 (aliphatic polyvalent carboxylic acid), and #7004 (polyether ester type) (all manufactured by Kusumoto Chemicals, Ltd.).

It is also possible to use in combination a pigment derivative such as a phthalocyanine derivative (product name: EFKA-745 (manufactured by EFKA)), or Solsperse 5000, 12000, or Solsperse 22000 (manufactured by Zeneca).

The content of the dispersant in the ink composition of the present invention is appropriately selected according to the intended purpose, but in general it is preferably 0.01 to 5 wt % of the weight of the entire ink composition.

### Surfactant

It is preferable to add a surfactant to the ink composition of the present invention in order to impart long-term discharge stability.

As the surfactant, those described in JP-A-62-173463 and JP-A-62-183457 can be cited. Examples thereof include anionic surfactants such as dialkylsulfosuccinic acid salts, alkylnaphthalene sulfonic acid salts, and fatty acid salts, nonionic surfactants such as polyoxyethylene alkyl ethers, polyoxyethylene alkyl aryl ethers, acetylene glycols, and polyoxyethylene/polyoxypropylene block copolymers, and cationic surfactants such as alkylamine salts and quaternary ammonium salts. An organofluoro compound may be used instead of the above-mentioned surfactant. The organofluoro compound is preferably hydrophobic. Examples of the organofluoro compound include fluorine-based surfactants, oillike fluorine-based compounds (e.g. fluorine oil), solid fluorine compound resins (e.g. tetrafluoroethylene resin), and those described in JP-B-57-9053 (paragraphs 8 to 17) and JP-A-62-135826.

The content of the surfactant in the ink composition of the present invention is appropriately selected according to the intended purpose and is generally preferably 0.0001 to 1 wt % relative to the weight of the entire ink composition.

### Sensitizing dye

The ink composition of the present invention may contain a sensitizing dye in order to promote decomposition of the above-mentioned polymerization initiator by absorbing specific actinic radiation, in particular when used for inkjet recording.

The sensitizing dye absorbs specific actinic radiation and attains an electronically excited state. The sensitizing dye in the electronically excited state causes actions such as electron transfer, energy transfer, or heat generation upon contact with the polymerization initiator. This causes the polymerization initiator to undergo a chemical change and decompose, thus forming a radical, an acid, or a base.

Preferred examples of the sensitizing dye include those that belong to compounds below and have an absorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred examples of the sensitizing dye include compounds represented by Formulae (IX) to (XIII) below.

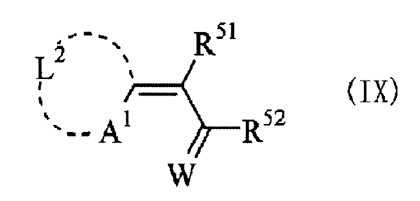

In Formula (IX), A¹ denotes a sulfur atom or NR⁵⁰, R⁵⁰ denotes an alkyl group or an aryl group, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

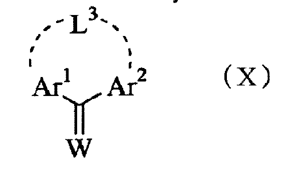

In Formula (X), Ar¹ and Ar² independently denote an aryl group and are connected to each other via a bond of -L³-. Here, L³ denotes -O- or -S-. W has the same meaning as that shown in Formula (IX).

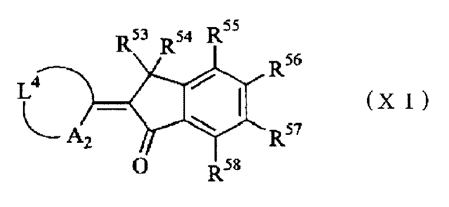

In Formula (XI), A₂ denotes a sulfur atom or NR⁵⁹, L⁴ denotes a non-metallic atomic group forming a basic nucleus of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

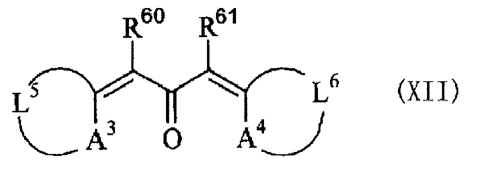

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

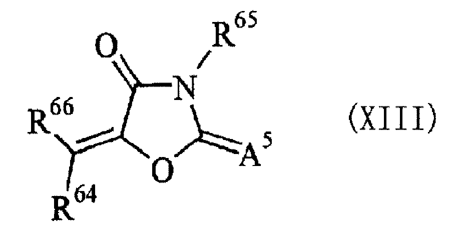

In Formula (XIII), R⁶⁶ denotes an aromatic ring or a hetero ring, which may have a substituent, and A⁵ denotes an oxygen atom, a sulfur atom, or =NR⁶⁷ . R⁶⁴ R⁶⁵ and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Specific examples of the compounds represented by Formulae (IX) to (XIII) include (E-1) to (E-20) listed below.

In some of the compound examples below, the hydrocarbon chain is described by a simplified structural formula in which symbols for carbon (C) and hydrogen (H) are omitted.

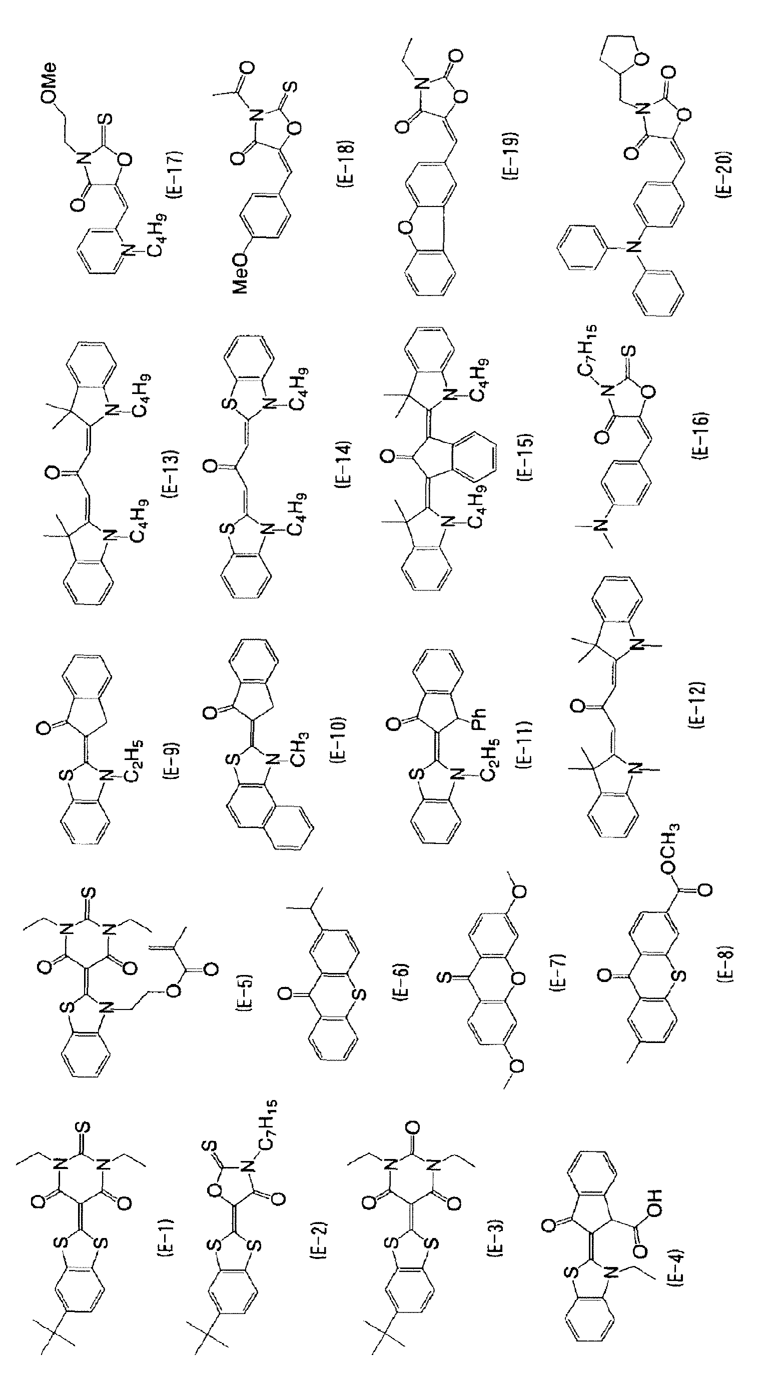

The content of the sensitizing colorant in the ink composition of the present invention is appropriately selected according to the intended purpose, but it is generally preferably 0.05 to 4 wt % relative to the weight of the entire ink composition.

### Cosensitizer

The ink composition of the present invention preferably comprises a cosensitizer. In the present invention, the cosensitizer has the function of further improving the sensitivity of the sensitizing dye to actinic radiation or the function of suppressing inhibition by oxygen of polymerization of a polymerizable compound, etc.

Examples of such a cosensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl p-dimethylaminobenzoate, p-formyldimethylaniline, and p-methylthiodimethylaniline.

Other examples of the cosensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the cosensitizer include amino acid compounds (e.g. *N*-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.) and Si-H compounds and Ge-H compounds described in JP-A-8-065779.

The content of the cosensitizer in the ink composition of the present invention is appropriately selected according to the intended purpose, but it is generally preferably 0.05 to 4 wt % relative to the weight of the entire ink composition.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition of the present invention may employ various organic and metal complex antifading agents. The organic antifading agents include hydroquinones, alkoxyphenols, dialkoxyphenols, phenols, anilines, amines, indanes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, left-hand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is preferably on the order of 0.1 to 8 wt % on the basis of the solids content in the ink composition.

### Conductive salt

The ink composition of the present invention may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition of the present invention in order to improve the adhesion to a recording medium.

Examples of the solvent include ketone-based solvents such as acetone, methyl ethyl ketone, and diethyl ketone, alcohol-based solvents such as methanol, ethanol, 2-propanol, 1-propanol, 1-butanol, and *tert*-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0 to 5 wt % relative to the total amount of the ink composition, and more preferably 0 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a 'carboxyl group-containing monomer', an 'alkyl methacrylate ester', or an 'alkyl acrylate ester' may preferably be used.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

The ink composition in the present invention preferably has a viscosity at 25°C of from 5 to 50 mPa·s.

The ink composition in the present invention is suitably used for the inkjet recording, and particularly the ink composition viscosity of which is in the above-described range is excellent in ink dichargeability from the inkjet nozzle.

### Properties of ink composition

In the present invention, from the viewpoint of dischageablity, the ink composition preferably has a viscosity at 25°C of no more than 40 mPa·s, more preferably 5 to 40 mPa·s, yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that the ratio of the components is appropriately adjusted so that the viscosity is in the above-described range. By setting the viscosity at room temperature is to be high, even when a porous recording medium is used, penetration of the ink into the recording medium can be prevented, and thus uncured monomer can be reduced. Furthermore, ink spreading when ink droplets have landed can be suppressed, and as a result there is the advantage that the image quality is improved.

The surface tension of the ink composition of the present invention at 25°C is preferably 20 to 35 mN/m, and yet more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (2) Inkjet recording method, inkjet recording device and print material

The ink composition of the present invention is suitably used for inkjet recording.

The inkjet recording method of the present invention is a method for forming an image by discharging the ink composition of the present invention onto a recording medium (support, recording material, etc.) for inkjet recording and curing the ink by irradiating the ink composition so discharged onto the recording medium with actinic radiation.

More particularly, the inkjet recording method of the present invention comprises a step (a¹) of discharging the ink composition of the present invention onto a recording medium and a step (b¹) of curing the ink composition by irradiating the ink composition so discharged with actinic radiation,

The inkjet recording method of the present invention comprises the steps (a¹) and (b¹) above and thus forms an image from the ink composition cured on the recording medium.

Furthermore, the printed material in the present invention is a printed material obtained using the ink composition of the present invention, and preferably a printed material recorded using the inkjet recording method of the present invention.

The above-described discharging is preferably conducted using an inkjet head which discharges the ink composition by the deformation of a piezoelectric element.

The above-described discharge is preferably conducted under the condition of 1 to 10 pL liquid amount, and 1,200 x 1,200 to 4,800 x 4,800 dpi.

The step (a¹) of the inkjet recording method of the present invention may employ an inkjet recording device that will be described in detail below.

### Inkjet recording system

The inkjet recording system used in the inkjet recording method of the present invention is not particularly limited, and a known inkjet recording system that can achieve a target resolution may be freely selected and used. That is, any known inkjet recording system, including a commercial system, may be used for carrying out ink discharge onto a recording medium in step (a) of the inkjet recording method of the present invention.

Examples of the inkjet recording system that can be used in the present invention include a system that comprises an ink supply system, a temperature sensor, and an actinic radiation source.

The ink supply system comprises, for example, a main tank containing the ink composition of the present invention, a supply pipe, an ink supply tank immediately before an inkjet head, a filter, and a piezo type inkjet head. The piezo type inkjet head is driven so as to discharge multisize dots of preferably 1 to 100 pL, and more preferably 1 to 10 pL, at a resolution of preferably 300 x 300 to 4,800 x 4,800 dpi, more preferably 1,200 x 1,200 to 4,800 x 4,800. Here, dpi referred to in the present invention denotes the number of dots per 2.54 cm.

Furthermore, in the inkjet recording method of the present invention, the injet head discharging the ink composition by the deformation of a piezoelectric element, what is called inkjet head of piezo type, is preferably used.

As described above, since it is desirable for the radiation curing type ink composition to be discharged at a constant temperature, a section from the ink supply tank to the inkjet head is thermally insulated and heated. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since good discharge stability can be obtained. By employing this method, high discharge stability can be realized.

The radiation curing type ink composition such as the ink composition of the present invention generally has a viscosity that is higher than that of a normal ink composition or a water-based ink used for an inkjet recording ink, and variation in viscosity due to a change in temperature at the time of discharge is large. Viscosity variation in the ink has a large effect on changes in liquid droplet size and changes in liquid droplet discharge speed and, consequently, causes the image quality to be degraded. It is therefore necessary to maintain the ink discharge temperature as constant as possible. In the present invention, the control range for the temperature is preferably ±5°C of a set temperature, more preferably ±2°C of the set temperature, and yet more preferably ±1°C of the set temperature.

The step (b¹) of curing the discharged ink composition by irradiating the ink composition with actinic radiation is now explained.

The ink composition discharged onto the recording medium cures upon exposure to actinic radiation. This is due to an initiating species such as a radical, an acid, or a base being generated by decomposition of the polymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizing agent, the peak wavelength of the actinic radiation is preferably 200 to 600 nm, more preferably 300 to 450 nm, and particulary preferably 350 to 420 nm.

Furthermore, the cationic polymerization initiation system of the ink composition of present unvention has sufficient sensitivity for low output actinic radiation. The actinic radiation is applied therefore so that the illumination intensity on the exposed surface is preferably 10 to 4,000 mW/cm², and more preferably 20 to 2,500 mW/cm².

As an actinic radiation source, a mercury lamp, a gas/solid laser, etc. are mainly used, and for UV photocuring inkjet a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses an LED that can emit actinic radiation whose wavelength is centered between 300 nm and 370 nm. Furthermore, another UV-LED is available, and irradiation can be carried out with radiation of a different UV bandwidth. The actinic radiation source particularly preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation for preferably 0.01 to 120 sec., and more preferably 0.1 to 90 sec.

Irradiation conditions and a basic method for irradiation with actinic radiation are disclosed in JP-A-60-132767. Specifically, a light source is provided on either side of a head unit that includes an ink discharge device, and the head unit and the light source are made to scan by a so-called shuttle system. Irradiation with actinic radiation is carried out after a certain time (preferably 0.01 to 0.5 sec., more preferably 0.01 to 0.3 sec., and yet more preferably 0.01 to 0.15 sec.) has elapsed from when the ink has landed. By controlling the time from ink landing to irradiation so as to be a minimum in this way, it becomes possible to prevent the ink that has landed on a recording medium from spreading before being cured. Furthermore, since the ink can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing the above-mentioned inkjet recording method, it is possible to keep the diameter of landed ink dots constant even for various recording media having different surface wettability, thus improving the image quality. In order to obtain a color image, it is preferable to overlap in order from low lightness colors. By overlapping in order from low lightness inks, it becomes easy for radiation to reach ink in a lower part, and good curing sensitivity, reduction of residual monomer, and improvement in adhesion can be expected. Although it is possible to carry out irradiation all at once after all colors are discharged, it is preferable in terms of promoting curing that exposure to light is carried out for each color.

In this way, the ink composition of the present invention cures with high sensitivity upon exposure to actinic radiation, and an image is formed on the surface of a recording medium.

In the present invention, the recording medium is not particularly limited, and a recording medium known as a support or a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal. In the present invention, as the recording medium, a non-absorbing recording medium may suitably be used.

In accordance with the present invention, there can be provided an ink composition that ensures excellent storage stability, enables stable discharge, and cures well even when a dye is used as a colorant, thus giving an excellently transparent and flexible inkjet image.

### Examples

The present invention is explained in further detail by reference to Examples and Comparative examples. However, the present invention should not be construed as being limited to these Examples.

'Parts' described below means 'parts by weight' unless otherwise specified.

The materials of the ink composition (radically polymerizable composition) used in Examples and Comparative examples in the present invention are shown below.

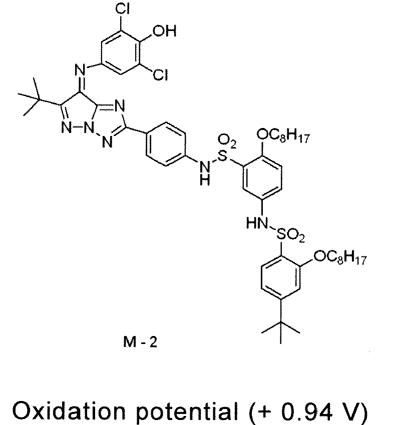

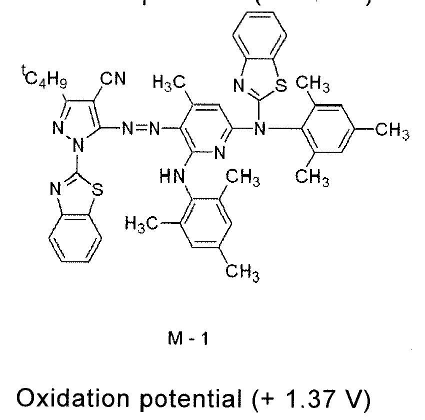

The chemical structures of the yellow dye and the cyan dye are shown below.

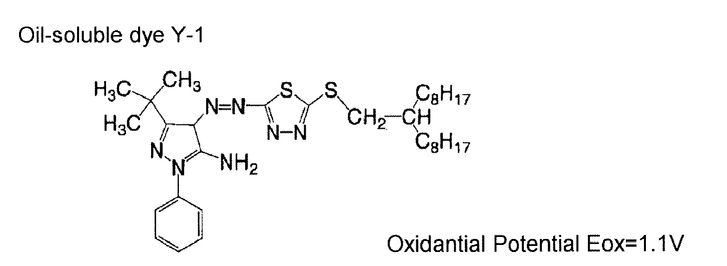

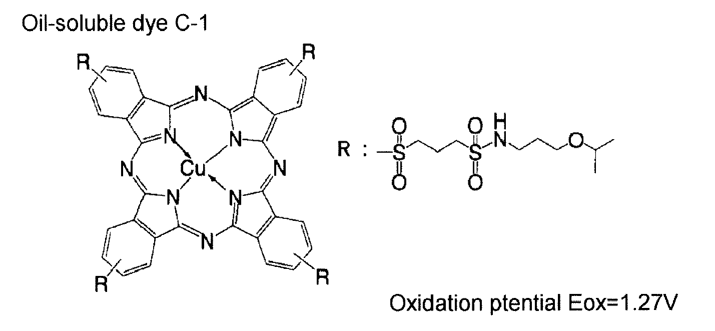

### Polymerizable monomer

Polymerizable compounds below were used.
- *N*-vinylcaprolactam (NVC, manufactured by BASF)
- SR506 (Isobornyl acrylate, manufactured by Sartomer Co., Inc.)
- NK ESTER AMP-10G (NK AMP-10G, PEA (phenoxyethyl acrylate), manufactured by Shin-Nakamura Chemical Co., Ltd.)
- SR508 (dipropylene glycol diacrylate, manufactured by Sartomer Co., Inc.)
- SR9003 (propylene glycol modified neopentyl glycol diacrylate, manufactured by Sartomer Co., Inc.)
- SR504 (EO-modified trimethylolpropane triacrylate (EO 3mol adduct), manufactured by Sartomer Co., Inc.)

### Radically polymerizable initiator

- Irgacure184 (polymerization intiator (1-hydroxy-cyclohexyl-phenyl-ketone), manufactured by Ciba Specialty Chemicals)
- Darocur TPO (polymerization initiator (2,4,6-trimethylbenzoyl-diphenyl-phosphine oxide), manufactured by Ciba Specialty Chemicals)
- Benzophenone (polymerization initiator, manufactured by Wako Pure Chemical Industries, Ltd.)

### Basic compound

- Basic compound A: dimethylaminoethyl acrylate (DMA: Osaka Organic Chemical Industry Ltd.)
- Basic compound B: aminoacrylate (EBECRYL P115: Daicel-UCB Co., Ltd.)
- Basic compound C: aminoacrylate (EBECRYL 7100: Daicel-UCB Co., Ltd.)
- Basic compound D: triethanolamine
- Basic compound E: hindered amine-based compound (TINUVIN 770DF: Ciba Specialty Chemicals)

In the present invention, basic compound B and basic compound C are not treated as monofunctional polymerization compounds.

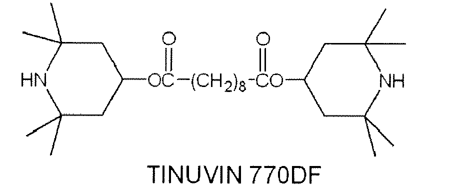

### Polymerization inhibitor

- FIRSTCURE ST-1 (polymerization inhibitor, manufactured by ChemFirst)

### Comparative pigment

- IRGALITE BLUE GLVO (cyan pigment, manufactured by Ciba Specialty Chemicals)
- CINQUASIA MAGENTA RT-335 D (magenta pigment, manufactured by Ciba Specialty Chemicals)
- NOVOPERM YELLOW H2G (yellow pigment, manufactured by Clariant Corp.)

### Comparative dispersant

- Solsperse 36000 (dispersant, manufactured by Noveon, Inc.)
- DISPERBYK168 (polymer dispersant, solid content 30 wt % BYK168, manufactured by BYK Chemie)

### Preparation of cyan mill base A

300 parts by weight of IRGALITE BLUE GLVO 300, 400 parts by weight of NK AMP-10G, and 300 parts of DISPERBYK168 were stired and mixed to give a cyan mill base A. Preparation of a cyan mill base was carried out by putting the components into an M50 disperser motor mill (manufactured by Eiger) and dispersing using zirconia beads having a diameter of 0.65 mm at a peripheral speed of 9 m/s for 4 hours.

### Preparation of magenta mill base B

300 parts by weight of CINQUASIA MAGENTA RT-335 D, 400 parts by weight of NK AMP-10G, and 300 parts of DISPERBYK168 were stirred and mixed to give a magenta mill base B. Preparation of a magenta mill base was carried out by putting the components into an M50 disperser motor mill (manufactured by Eiger) and dispersing using zirconia beads having a diameter of 0.65 mm at a peripheral speed of 9 m/s for 4 hours.

### Preparation of yellow mill base C

300 parts by weight of NOVOPERM YELLOW H2G, 400 parts by weight of NK AMP-10G, and 300 parts of DISPERBYK168 were stirred and mixed to give a yellow mill base B. Preparation of a yellow mill base was carried out by putting the components into an M50 disperser motor mill (manufactured by Eiger) and dispersing using zirconia beads having a diameter of 0.65 mm at a peripheral speed of 9 m/s for 4 hours.

### Preparation of ink

### Examples 1 to 10

### Ink compositions 1 to 8 and 10

Each component in Table 2 was mixed by a stirrer to give ink compositions 1 to 8 and 10. The unit of numbers in the table is 'part by weight'.

### Ink Composition 9

Each component was mixed according to the ratio shown in Table 2 by a stirrer to give the ink composition 9. The unit of numbers in the table is 'part by weight'. The percentage of monofunctional monomers was more than 80% of monomers used, and the flexibility was further improved.

### Comparative Examples 1 to 4

### Comparative ink composition 1

The basic compound was removed from the ink composition 1 of the Example, and each component was mixed according to the ratio shown in Table 3 by a stirrer to give Comparative ink composition 1. The unit of numbers in the table is 'part by weight'.

### Comparative ink composition 2

Each component was mixed according to the ratio shown in Table 3, which is changed from the ratio of polymerization compound in the ink composition 1 of the Example, by a stirrer to give Comparative ink composition 2. The unit of numbers in the table is 'part by weight'.

### Comparative ink composition 3

Each of the same components as the ink composition 1 of Example, except that the dyes were changed to pigments, was mixed according to Table 3 by a stirrer to give Comparative ink composition 3. The unit of numbers in the table is 'part by weight'.

### Comparative ink composition 4

Each of the same components, except that M-1 dye of the ink composition 1 of the Example was changed to M-2 dye, was mixed according to Table 3 by a stirrer to give Comparative ink composition 4. The unit of numbers in the table is 'part by weight'.

### Comparative ink composition 5

*N*-vinylcaprolactam is removed from the ink composition 1 of the Example, and each component was mixed according to the ratio shown in Table 3 by a stirrer to give Comparative ink composition 5. The unit of numbers in the table is 'part by weight'.

### Evaluation conditions

The ink compositions of the Examples and Comparative Examples were maintained at 60°C for 4 weeks.

The curability, the proportion of *N*-vinylcaprolactam decomposed, the flexibility, and the adhesion were evaluated using these ink compositions.

The proportion of *N*-vinylcaprolactam decomposed in the ink composition was measured using liquid chromatography, and the change from the peak area of *N*-vinylcaprolactam in the initial state was ascertained.

### Inkjet image recording method

A color printed image with the average thickness of 12 µm was prepared using the ink composition by the inkjet recording method.

Inkjet recording was carried out on a recording medium using an experimental inkjet recording system having a piezo system inkjet nozzle. The ink supply system comprised a main tank, a supply pipe, an ink supply tank immediately before an inkjet head, a filter, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ± 2°C. The piezo system inkjet head was driven so as to discharge multisize dots of 8 to 30 pL at a resolution of 720 X 720 dpi. The exposure system, the main scanning speed, and the discharge frequency were adjusted so that, after landing, UV light was focused to give an exposure area illumination intensity of 1,630mW/cm², and irradiation started 0.1 sec. after the ink landed on the recording medium. The cumulative amount of light applied to an image was adjusted so as to be 1,000 mJ/cm². The UV lamp employed a HAN250NL high-cure mercury lamp (manufactured by GS Yuasa Corporation). As a recording medium, a PET film (HK31-HW, film thickness 120 µm, manufactured by Higashiyama Film Corporation) was used.

### Discharge stability

10 sheets of A4 size PET film were subjected to a continuous image recording test, the inkjet recording system was left for 2 weeks, the image recording test was then carried out again, and the first image obtained was visually evaluated using the following criteria.
2: There were no defects in the image.
1: Image dropouts were observed on the leading edge.

### Image evaluation (evaluation of transparency)

Transparency of the printed materials was visually evaluated using the following criteria. The tint change was also visually evaluated.
3: transparent
2: translucent
1: opaque

### Method for measuring curing sensitivity (curability)

In accordance with the above-mentioned inkjet recording method, a solid printed image having an average film thickness of 12 µm was formed, and the stickiness of the image was evaluated by touch after the image was irradiated with ultraviolet rays and the result was expressed using the following criteria based on the change between before and after aging.
3: No change between before and after aging.
2: Slight change between before and after aging, image was slightly sticky after aging.
1: Large change between before and after aging, and after aging the image was not hardened enough, so that uncured ink was transferred to the hand.

### Decomposition rate of NVC

### Liquid chromatography measurement method

The ink composition before and after aging was measured using a liquid chromatograph manufactured by Waters and a liquid chromatograph column RP-18 manufactured by Kanto Chemical Co., Inc. The peak areas of the *N-*vinylcaprolactam peaks before and after aging were compared, and the decrease (proportion decomposed) was calculated. The smaller the decrease, the more suppressed the decomposition.

### Flexibility evaluation method: bending test

In the examples, as a method for evaluating the flexibility of a cured film before and after storage, a bending test was carried out.

In accordance with the above-mentioned inkjet image recording method, an E5000 ester film (film thickness 125 µm, manufactured by Toyobo Co., Ltd.) was used as a recording medium, and three solid printed images having average image area film thicknesses of 12 µm, 24 µm, and 36 µm were formed. The bending test involved bending once at 25°C the recording medium on which an image had been formed, and an evaluation was carried out of the presence or absence of cracks in the image area. In general, when the average film thickness is large, the strain occurring in the image area when the bent portion of the image area becomes large, and cracks easily occur. That is, testing whether or not cracks occur in an image area having a larger film thickness gives a measure of the flexibility.

The evaluation criteria were as follows.
4: No cracks occurred for samples having an average film thickness of 12 µm, 24 µm, or 36 µm.
3: No cracks occurred for samples having an average film thickness of 12 µm or 24 µm.
2: No cracks occurred for a sample having an average film thickness of 12 µm, but cracks occurred in the bent portion of an image area of a sample having an average film thickness of 24 µm.
1: Cracks occurred in the bent portion of an image area for all the samples having an average film thickness of 12 µm, 24 µm, and 36 µm.

**(Table 2)**

| | Color | Examples | | | | | | | | | | | | | |
|---|---|---|---|---|---|---|---|---|---|---|---|---|---|---|---|
| | | 1 | | | 2 | 3 | 4 | 5 | 6 | 7 | 8 | 9 | | | 10 |
| | | M | Y | C | M | M | M | M | M | M | M | M | Y | C | M |
| Dye | M-1 | 12 | - | - | 12 | 12 | 12 | 12 | 12 | 12 | 12 | 12 | - | - | 12 |
| | Y-1 | - | 12 | - | - | - | - | - | - | - | - | - | 12 | - | - |
| | C-1 | - | - | 6 | - | - | - | - | - | - | - | - | - | 6 | - |
| monofunctional monomer | N-vinylcaprolactam | 15 | 15 | 17 | 15 | 15 | 15 | 15 | 15 | 15 | 15 | 22 | 22 | 25 | 13 |
| | NK-AMP 10G (Phenoxyethyl acrylate) | 28.4 | 28.4 | 30.4 | 29.3 | 24.4 | 19.4 | 28.4 | 28.4 | 28.4 | 28.4 | 48.4 | 48.4 | 50.4 | 30.4 |
| | SR506(isobornyl acrylate) | 5 | 5 | 5 | 5 | 5 | 5 | 5 | 5 | 5 | 5 | - | - | - | 5 |
| Polyfunctional monomer | SR508(dipropylene glycol diacrylate) | 20 | 20 | 22 | 20 | 20 | 20 | 20 | 20 | 20 | 20 | - | - | - | 20 |
| | SR504 (EO-modified pentaerythritol triacrylate) | 5 | 5 | 5 | 5 | 5 | 5 | 5 | 5 | 5 | 5 | - | - | - | 5 |
| | DVE-3(triethylene glycol divinyl ether) | - | - | - | - | - | - | - | - | - | - | 3 | 3 | 4 | - |
| Polymerization initiator | TPO | 8.5 | 8.5 | 8.5 | 8.5 | 8.5 | 8.5 | 8.5 | 8.5 | 8.5 | 8.5 | 8.5 | 8.5 | 8.5 | 8.5 |
| | Irgacure 184 | 2 | 2 | 2 | 2 | 2 | 2 | 2 | 2 | 2 | 2 | 2 | 2 | 2 | 2 |
| | Benzophene | 3 | 3 | 3 | 3 | 3 | 3 | 3 | 3 | 3 | 3 | 3 | 3 | 3 | 3 |
| Polymerization inhibitor | Firstcure ST-1 | 0.05 | 0.05 | 0.05 | 0.05 | 0.05 | 0.05 | 0.05 | 0.05 | 0.05 | 0.05 | 0.05 | 0.05 | 0.05 | 0.05 |
| Surfactant | BYK307 | 0.05 | 0.05 | 0.05 | 0.05 | 0.05 | 0.05 | 0.05 | 0.05 | 0.05 | 0.05 | 0.05 | 0.05 | 0.05 | 0.05 |
| Basic compound | Diethylaminoethyl Acrylate | 1 | 1 | 1 | 0.1 | 5 | 10 | - | - | - | - | 1 | 1 | 1 | - |
| | EBECRYL P115(amino acrylate) | - | - | - | - | - | - | 1 | - | - | - | - | - | - | - |
| | EBECRYL 7100(amino acrylate) | - | - | - | - | - | - | - | 1 | - | - | - | - | - | - |
| | Triethanolamin | - | - | - | - | - | - | - | - | 1 | - | - | - | - | - |
| | TINUVIN 770DF | - | - | - | - | - | - | - | - | - | 1 | - | - | - | - |
| Total | | 100.00 | 100.00 | 100.00 | 100.00 | 100.00 | 100.00 | 100.00 | 100.00 | 100.00 | 100.00 | 100.00 | 100.00 | 100.00 | 100.00 |
| | | | | | | | | | | | | | | | |
| Total amount of monofunctional monomer | | 49.4 | 49.4 | 53.4 | 49.4 | 49.4 | 49.4 | 48.4 | 48.4 | 48.4 | 48.4 | 71.4 | 71.4 | 76.4 | 48.4 |
| Total amount of polyfunctional monomer | | 25 | 25 | 27 | 25 | 25 | 25 | 26 | 26 | 26 | 25 | 3 | 3 | 4 | 25 |
| Ratio of monofunctional monomer | | 66.4 | 66.4 | 66.4 | 66.4 | 66.4 | 66.4 | 65.1 | 65.1 | 65.1 | 65.9 | 96.0 | 96.0 | 95.0 | 65.9 |
| Evaluation result | | | | | | | | | | | | | | | |
| Curing sensitivity | | 3 | 3 | 3 | 3 | 3 | 3 | 3 | 3 | 3 | 2 | 3 | 3 | 3 | 2 |
| Decomposition rate of NVC(%) | | 0 | 0 | 0 | 5 | 0 | 0 | 0 | 0 | 0 | 0 | 0 | 0 | 0 | 0 |
| Flexibility | | 3 | 3 | 3 | 3 | 3 | 3 | 3 | 3 | 3 | 3 | 4 | 4 | 4 | 3 |
| Discharge stability | | 2 | 2 | 2 | 2 | 2 | 2 | 2 | 2 | 2 | 2 | 2 | 2 | 2 | 2 |
| Image evaluation (transparency) | | 3 | 3 | 3 | 3 | 3 | 3 | 3 | 3 | 3 | 3 | 3 | 3 | 3 | 3 |

**(Table 3)**

| | | Comparative Examples | | | | | | | | | | |
|---|---|---|---|---|---|---|---|---|---|---|---|---|
| | | 1 | | | 2 | | | 3 | | | 4 | 5 |
| | Color | M | Y | C | M | Y | C | M | Y | C | M | M |
| Dye | M-1 | 12 | - | - | 12 | - | - | - | - | - | - | 12 |
| | M-2 | - | - | - | - | - | - | - | - | - | 12 | - |
| | Y-1 | - | 12 | - | - | 12 | - | - | - | - | - | - |
| | C-1 | - | - | 6 | - | - | 6 | - | - | - | - | - |
| Pigment dispersion | Magenta mill base A | - | - | - | - | - | - | 12 | - | - | - | - |
| | Yellow mill base A | - | - | - | - | - | - | - | 12 | - | - | - |
| | Cyan mill base A | - | - | - | - | - | - | - | - | 6 | - | - |
| Monofunctional monomer | N-vinylcaprolactam | 15 | 15 | 17 | 15 | 15 | 17 | 15 | 15 | 17 | 15 | - |
| | NK-AMP 10G (Phenoxyethyl acrylate) | 29.4 | 29.4 | 31.4 | 29.4 | 29.4 | 31.4 | 28.4 | 28.4 | 30.4 | 28.4 | 43.4 |
| | SR506(isobornyl acrylate) | 5 | 5 | 5 | - | - | - | 5 | 5 | 5 | 5 | 5 |
| Polyfunctional monomer | SR508(dipropylene glycol diacrylate) | 20 | 20 | 22 | 24 | 24 | 26 | 20 | 20 | 22 | 20 | 20 |
| | SR504(EO-modified pentaerythritol triacrylate) | 5 | 5 | 5 | 5 | 5 | 5 | 5 | 5 | 5 | 5 | 5 |
| Polymerization Initiator | TPO | 8.5 | 8.5 | 8.5 | 8.5 | 8.5 | 8.5 | 8.5 | 8.5 | 8.5 | 8.5 | 8.5 |
| | Irgacure184 | 2 | 2 | 2 | 2 | 2 | 2 | 2 | 2 | 2 | 2 | 2 |
| | Benzophene | 3 | 3 | 3 | 3 | 3 | 3 | 3 | 3 | 3 | 3 | 3 |
| Polymerization Inhibitor | Firstcure ST-1 | 0.05 | 0.05 | 0.05 | 0.05 | 0.05 | 0.05 | 0.05 | 0.05 | 0.05 | 0.05 | 0.05 |
| Surfactant | BYK307 | 0.05 | 0.05 | 0.05 | 0.05 | 0.05 | 0.05 | 0.05 | 0.05 | 0.05 | 0.05 | 0.05 |
| Basic Compound | Diethylaminoethyl Acrylate | - | - | - | 1 | 1 | 1 | 1 | 1 | 1 | 1 | 1 |
| Total | | 100.00 | 100.00 | 100.00 | 100.00 | 100.00 | 100.00 | 100.00 | 100.00 | 100.00 | 100.00 | 100.00 |
| | | | | | | | | | | | | |
| Total amount of monofunctional monomer | | 49.4 | 49.4 | 53.4 | 45.4 | 45.4 | 49.4 | 54.2 | 54.2 | 55.8 | 49.4 | 49.4 |
| Total amount of polyfunctional monomer | | 25 | 25 | 27 | 29 | 29 | 31 | 25 | 25 | 27 | 25 | 25 |
| Ratio of monofunctional monomer | | 66.4 | 66.4 | 66.4 | 61.0 | 61.0 | 61.4 | 68.4 | 68.4 | 67.4 | 66.4 | 66.4 |
| Evaluation result | | | | | | | | | | | | |
| Curing sensitivity | | 2 | 2 | 1 | 3 | 3 | 3 | 3 | 3 | 3 | 1 | 1 |
| Decomposition rate of NVC(%) | | 30 | 30 | 35 | 0 | 0 | 0 | 0 | 0 | 0 | 0 | - |
| Flexibility | | 3 | 3 | 3 | 2 | 2 | 2 | 3 | 3 | 3 | 3 | 3 |
| Discharge stability | | 2 | 2 | 2 | 2 | 2 | 2 | 1 | 1 | 1 | 2 | 2 |
| Image evaluation (transparency) | | 3 | 3 | 3 | 3 | 3 | 3 | 2 | 1 | 2 | 3 | 3 |

## Claims

1. An ink composition comprising
(A) an *N*-vinyllactam;
(B) another polymerizable compound;
(C) a polymerization initiator;
(D) a basic compound; and
(E) an oil-soluble dye having an oxidation potential of equal to or higher than 1.0 V (vs. SCE);
wherein of the total weight of the *N*-vinyllactam (A) and the other polymerizable compound (B) not less than 65 wt % is a monofunctional polymerizable compound.

2. The ink composition according to Claim 1, wherein the content of the *N*-vinyllactam (A) is at least 15 wt % and not more than 40 wt % of the total weight of the ink composition.

3. The ink composition according to Claim 1 or 2, wherein the *N-*vinyllactam (A) is *N*-vinylcaprolactam.

4. The ink composition according to any one of Claims 1 to 3, wherein the basic compound (D) is a nitrogen-containing organic basic compound.

5. The ink composition according to any one of Claims 1 to 4, wherein the oil-soluble dye having an oxidation potential of equal to or higher than 1.0 V (vs. SCE) is selected from the group consisting of M-1, Y-1, and C-1 below.

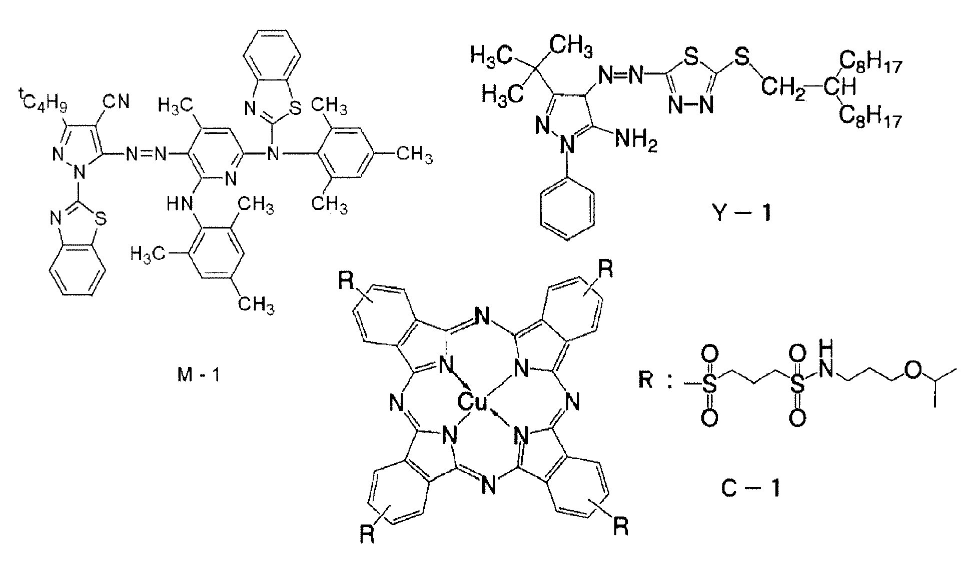

6. The ink composition according to any one of Claims 1 to 5, wherein the ink composition has a viscosity at 25°C of 5 to 50 mPa·s.

7. Use of the ink composition according any one of Claims 1 to 6 as an ink composition for inkjet recording.

8. An inkjet recording method comprising:
a step of discharging an ink composition according to any one of Claims 1 to 6 onto a recording medium; and
a step of curing the ink composition by irradiating the discharged ink composition with actinic radiation.

9. A printed material recorded by the inkjet recording method according to Claim 8.
